# EUROPEAN PATENT SPECIFICATION

(11) **EP 2 224 528 B1**
(45) Date of publication and mention of the grant of the patent: **06.11.2013**
(21) Application number: 08852810.4
(22) Date of filing: 17.11.2008
(51) Int. Cl.: H01M 8/04, H01M 8/06, H01M 8/10

(54) **FUEL CELL SYSTEM AND METHOD OF OPERATING THE SAME**
BRENNSTOFFZELLENSYSTEM UND VERFAHREN ZU SEINEM BETRIEB
SYSTÈME DE PILE À COMBUSTIBLE ET SON PROCÉDÉ DE FONCTIONNEMENT

(30) Priority: 22.11.2007 JP 2007303432
(43) Date of publication of application: 01.09.2010
(73) Proprietor: Panasonic Corporation, Kadoma-shi Osaka 571-8501 (JP)
(72) Inventor: SAKAI, Osamu, 1-61, Schiromi 2-chome, Chuo-ku, Osaka-shi, Osaka 540-6207 (JP); YASUMOTO, Eiichi, 1-61, Schiromi 2-chome, Chuo-ku, Osaka-shi, Osaka 540-6207 (JP); SUGAWARA, Yasushi, 1-61, Schiromi 2-chome, Chuo-ku, Osaka-shi, Osaka 540-6207 (JP); OHARA, Hideo, 1-61, Schiromi 2-chome, Chuo-ku, Osaka-shi, Osaka 540-6207 (JP); URATA, Takayuki, 1-61, Schiromi 2-chome, Chuo-ku, Osaka-shi, Osaka 540-6207 (JP)
(74) Representative: Leinweber & Zimmermann
(86) International application number: PCT/JP2008/003349
(87) International publication number: WO 2009/066437

(56) References cited:
- JP-A- 8 222 259
- JP-A- 2000 156 236
- JP-A- 2002 208 422
- JP-A- 2005 285 396
- JP-A- 2007 179 833
- JP-A- 2007 242 491

## Description

### Technical Field

The present invention relates to a fuel cell system and a method for operating the fuel cell system, and particularly to a fuel cell system and a method for operating the fuel cell system, each of which prevents a CO poisoning resistance of a catalyst of an anode from deteriorating.

### Background Art

A fuel cell system is typically configured such that a plurality of cells (unit cells) are stacked on one another. Each of the cells includes: a polymer electrolyte layer which transports ions; a catalyst-containing anode and a catalyst-containing cathode which are disposed to sandwich the polymer electrolyte layer; a fuel gas channel through which a fuel gas flows while contacting the anode; and an oxidizing gas channel through which an oxidizing gas flows while contacting the cathode. Since means for supplying a hydrogen gas that is the fuel gas used in the fuel cell system is not developed as an infrastructure, a domestic fuel cell is typically provided with a fuel processor. The fuel processor typically includes a reformer configured to reform a city gas, developed as an infrastructure, into a hydrogen-rich reformed gas. However, since the reformed gas contains a large amount of carbon monoxide (hereinafter referred to as "CO") as a byproduct, a shift converter and a purifier are normally provided downstream of the reformer, and a CO concentration of the reformed gas is reduced to 10 ppm or less. Such gas is supplied as the fuel gas to the anode of the fuel cell.

Typically used as a material of the catalyst contained in the anode is platinum. However, the platinum is poisoned by the CO in an operating temperature range of the fuel cell, and this deteriorates a catalytic activity of the platinum. Therefore, the catalyst of the anode is normally constituted by a material, such as a platinum-ruthenium alloy, having the CO poisoning resistance.

However, even in a case where the catalyst of the anode is constituted by the material having the CO poisoning resistance, the CO concentration of the fuel gas has to be suppressed to 10 ppm or less in order to secure the catalytic activity of the catalyst of the anode. Therefore, as described above, the fuel processor is provided with the shift converter and the purifier to reduce the CO concentration of the reformed gas to 10 ppm or less. With this, the catalytic activity of the catalyst of the anode is prevented from deteriorating.

Here, known as a technology which relates to the present invention in that the oxidizing gas in the fuel cell is replaced with a purge gas is a fuel cell system which replaces the oxidizing gas with an inactive gas at the time of an operation stop of the system (see Patent Document 1 for example). The fuel cell system disclosed in Patent Document 1 stops in a state where the fuel gas and the inactive gas are sealed in the fuel cell. Therefore, the potential of each of the anode and the cathode can be maintained low, and deterioration caused by oxidization and dissolution of the electrode can be suppressed.

Moreover, known as a technology which relates to the present invention in that moisture in the fuel cell is removed is a fuel cell system configured to, when stopping the operation, generate electric power by supplying the oxidizing gas whose humidity is lower than the humidity of the oxidizing gas used in a normal operation, to reduce moisture remaining in the fuel cell (see Patent Document 2 for example). The fuel cell system disclosed in Patent Document 2 can shorten a processing time for removing the moisture remaining in the fuel cell. Therefore, when the fuel cell stops at 0°C or lower, damages caused by freezing of the remaining moisture can be prevented. Moreover, known is a fuel cell system which supplies a dry reactant gas as the purge gas to the fuel cell when stopping the operation of the fuel cell (see Patent Document 3 for example). The fuel cell system disclosed in Patent Document 3 can purge the moisture in the fuel cell by supplying the dry reactant gas to the fuel cell. Moreover, known is a fuel cell system in which a moisture adsorption portion including an adsorbent is disposed on at least one of an air passage through which oxygen flows and a hydrogen passage through which hydrogen flows (see Patent Document 4 for example). In the fuel cell system disclosed in Patent Document 4, after stopping the operation of the fuel cell system, both end portions of each of the air passage and the hydrogen passage are closed, and the moisture adsorption portion adsorbs the moisture inside the fuel cell. Thus, the moisture inside the fuel cell can be removed. Further, known is a fuel cell system including: a circulating means for circulating a cathode gas, discharged from fuel cell, as a cathode circulating gas toward the cathode side of the fuel cell; and a moisture removing means for removing the moisture in the cathode circulating gas (see Patent Document 5 for example). In the fuel cell system disclosed in Patent Document 5, when stopping the fuel cell, the supply of each of the cathode gas and the anode gas is stopped, and the cathode side of the fuel cell is sealed. Then, the cathode circulating gas is caused to circulate while the moisture removing means removes the moisture in the cathode circulating gas. With this, the amount of moisture in the fuel cell can be reduced.
Patent Document 1: Japanese Laid-Open Patent Application Publication No. 2005-71778
Patent Document 2: Japanese Laid-Open Patent Application Publication No. 2006-156085
Patent Document 3: Japanese Laid-Open Patent Application Publication No. 2004-265684
Patent Document 4: Japanese Laid-Open Patent Application Publication No. 2002-208429
Patent Document 5: Japanese Laid-Open Patent Application Publication No. 2007-323863

### Disclosure of the Invention

### Problems to be Solved by the Invention

However, even in the case of the above conventional fuel cell systems, there is still room for improvement in order to prevent the change of wettability of the anode when the fuel cell system is operated for a long period of time and prevent the CO poisoning resistance from deteriorating due to the change of the wettability.

The present invention was made to solve the above problems, and a first object of the present invention is to provide a fuel cell system and a method for operating the fuel cell system, each of which is capable of recovering the deterioration of the wettability of the anode and the deterioration of the CO poisoning resistance of the catalyst of the anode. A second object of the present invention is to provide a fuel cell system and a method for operating the fuel cell system, each of which can suppress damages and the like of the polymer electrolyte membrane due to freezing of the moisture remaining in the fuel cell when the fuel cell stops at 0°C or lower.

### Means for Solving the Problems

In order to solve the above problems, the present inventors have diligently studied using a polymer electrolyte fuel cell. As a result, the present inventors have found that the CO poisoning resistance of the anode of the fuel cell recovers by supplying a dry gas to the anode whose CO poisoning resistance has significantly deteriorated by a long-time operation. The deterioration of the CO poisoning resistance appears as the decrease in the output voltage of the fuel cell. That the decrease in the output voltage of the fuel cell is caused by the deterioration of the anode has been confirmed by changing the CO concentration of the fuel gas and measuring the change of the output voltage.

However, a mechanism for recovering the CO poisoning resistance of the catalyst of the anode by the supply of the dry gas is not-yet-understood. The present inventors presume this mechanism as below. To be specific, the surface of the anode becomes hydrophilic by the long-time operation of the fuel cell, and because of this, the anode holds a large amount of water. This large amount of water deteriorates the CO poisoning resistance of the anode. As a result, the output voltage significantly decreases. Therefore, by supplying the dry gas to the anode, the large amount of water is removed by the dry gas. Thus, the CO poisoning resistance of the anode recovers.

In addition, the following matters are noted.

First, the dry gas needs to be supplied to the anode when the fuel cell is not generating the electric power. The present inventors has confirmed that even if the dry gas is supplied to the anode when the fuel cell is generating the electric power, the deterioration of the CO poisoning resistance of the anode does not recover. Moreover, if the dry gas is supplied to the anode while the fuel cell is generating the electric power, damages and the like of the polymer electrolyte membrane may occur. Therefore, in the case of the technology disclosed in Patent Document 2 in which when stopping the operation, the electric power is generated by supplying the oxidizing gas whose humidity is lower than the humidity of the oxidizing gas used in the normal operation, to reduce the moisture remaining in the fuel cell, the moisture is removed while the fuel cell is generating the electric power. Therefore, it is thought that the deterioration of the CO poisoning resistance of the anode cannot be recovered by this technology.

Second, regarding the degree of dryness of the dry gas, it is necessary to understand that the degree of dryness is significantly different between a humidified gas and a non-humidified gas. A dew point of the non-humidified gas is a temperature below zero whereas a dew point of the humidified gas is a temperature equal to or higher than room temperature. Therefore, the present inventors think that even if the humidified gas whose humidity is low is supplied to the anode, the deterioration of the CO poisoning resistance of the anode can recover little. The technology described in Patent Document 2 uses the humidified (low-humidity) gas to remove the moisture. Therefore, in light of this, it is thought that the deterioration of the CO poisoning resistance of the anode cannot be recovered by this technology.

Third, it is effective to supply the purge gas to at least one of the anode and the cathode. This is because, for example, in a case where the dry gas is supplied to only the cathode, the moisture remaining in the cathode is removed, and then, the moisture of the anode moves to the cathode through the polymer electrolyte layer by a moisture concentration difference between the anode and the cathode, and as a result, both the moisture of the anode and the moisture of the cathode are removed.

The present invention was made based on these findings. To be specific, a fuel cell system according to the present invention includes: a fuel cell including an anode containing a catalyst and having gas diffusivity, a cathode containing a catalyst and having gas diffusivity, a fuel gas internal channel formed such that a fuel gas flows while contacting the anode, and an oxidizing gas internal channel formed such that an oxidizing gas flows while contacting the cathode; an oxidizing gas supplying passage having a downstream end communicated with an upstream end of the oxidizing gas internal channel; an oxidizing gas supplying device connected to an upstream end of the oxidizing gas supplying passage and configured to supply the oxidizing gas through the oxidizing gas supplying passage to the oxidizing gas internal channel; an oxidizing gas discharging passage having an upstream end communicated with a downstream end of the oxidizing gas internal channel; a moisture exchanger disposed on both the oxidizing gas supplying passage and the oxidizing gas discharging passage and configured to exchange moisture between the oxidizing gas flowing through the oxidizing gas supplying passage and a gas flowing through the oxidizing gas discharging passage; a gas circulating passage forming/canceling device configured to form or cancel a closed gas circulating passage by connecting or separating a portion (hereinafter referred to as a first portion) of the oxidizing gas discharging passage which portion is located downstream of the moisture exchanger with or from a first connecting point of the oxidizing gas supplying passage which point is located downstream of the moisture exchanger; an air blower configured to circulate a gas in the gas circulating passage; and an atmosphere communicating/closing device configured to cause a portion (hereinafter referred to as a second portion) of the oxidizing gas supplying passage, which portion extends between the first connecting point and the moisture exchanger, to be communicated with atmosphere or to be closed. Here, in the present invention, the gas in the gas circulating passage denotes a gas existing in the gas circulating passage and is a gas containing at least the oxidizing gas.

With this, while the fuel cell system stops, the moisture retained by the gas in the gas circulating passage is absorbed and removed in the moisture exchanger by the dry oxidizing gas supplied from the oxidizing gas supplying device. Therefore, by circulating the gas in the gas circulating passage, the moisture retained by the cathode and the anode during the operation can be removed. On this account, the gas diffusivity of the gas diffusion layer can be recovered, and the deterioration of the CO poisoning resistance of the anode which has deteriorated by the operation can be recovered. Further, even in a case where the ambient temperature of the fuel cell system is low (for example, 0°C or lower), the moisture retained by the cathode and the anode during the electric power generation is absorbed and removed by the dry oxidizing gas, so that damages and the like of the polymer electrolyte membrane due to freezing of the moisture remaining in the fuel cell can be suppressed.

Moreover, in the fuel cell system according to the present invention, in a stop operation of the fuel cell system, the gas circulating passage forming/canceling device may connect the first portion of the oxidizing gas discharging passage and the first connecting point of the oxidizing gas supplying passage to form the gas circulating passage by a portion of the oxidizing gas supplying passage which portion is located downstream of the first connecting point, the oxidizing gas internal channel, and the oxidizing gas discharging passage, the atmosphere communicating/closing device may cause the second portion of the oxidizing gas supplying passage to be communicated with the atmosphere, and the air blower may circulate the gas in the gas circulating passage to exchange moisture between the oxidizing gas flowing through the oxidizing gas supplying passage and the gas flowing through the oxidizing gas discharging passage by the moisture exchanger.

Moreover, the fuel cell system according to the present invention may further includes: a controller; and a gas discharging passage through which the second portion of the oxidizing gas supplying passage is communicated with the atmosphere, wherein: the gas circulating passage forming/canceling device may be a first three-way valve which is disposed on the first portion of the oxidizing gas discharging passage and selectively connects a part of the first portion, which part is located on a side where the moisture exchanger is provided, with the first connecting point of the oxidizing gas supplying passage or with a downstream end portion of the first portion; the atmosphere communicating/closing device may be a second three-way valve which is disposed on the second portion of the oxidizing gas supplying passage and selectively connects a part of the second portion, which part is located on the side where the moisture exchanger is provided, with a part of the second portion, which part is located on a side where the first connecting point is provided, or with the gas discharging passage; and the controller may control the oxidizing gas supplying device, the first three-way valve, and the second three-way valve.

Moreover, in the fuel cell system according to the present invention, in a stop operation of the fuel cell system, the controller may cause the first three-way valve to connect the part of the first portion, which part is located on the side where the moisture exchanger is provide, with the first connecting point of the oxidizing gas supplying passage, and after that, the controller may cause the second three-way valve to connect the part of the second portion, which part is located on the side where the moisture exchanger is provided, with the gas discharging passage and may cause the oxidizing gas supplying device to supply the oxidizing gas.

Moreover, the fuel cell system according to the present invention may further include a temperature detector configured to detect a temperature of the fuel cell, wherein in a case where the temperature of the fuel cell detected by the temperature detector is equal to or lower than a preset threshold, the controller may cause the oxidizing gas supplying device to stop supply of the oxidizing gas and may cause the air blower to stop circulation of the gas in the gas circulating passage.

With this, a moisture removing operation of the fuel cell can be accurately carried out. Thus, the energy saving effect can be obtained, and the polymer electrolyte layer can be prevented from being excessively dried.

Moreover, the fuel cell system according to the present invention may further include a pressure detector configured to detect a pressure of the gas in the gas circulating passage, wherein in a case where the pressure in the gas circulating passage detected by the pressure detector is a negative pressure, the controller may cause the second three-way valve to connect the part of the second portion, which part is located on the side where the moisture exchanger is provided, with the part of the second portion, which part is located on the side where the first connecting point is provided, to carry out pressure compensation.

Moreover, the fuel cell system according to the present invention may further include a storage portion configured to store the number of times of executions of the pressure compensation, wherein in a case where the number of times of executions of the pressure compensation is equal to or larger than a predetermined number of times, the controller may cause the oxidizing gas supplying device to stop supply of the oxidizing gas and may cause the air blower to stop circulation of the gas.

With this, the moisture removing operation of the fuel cell can be accurately carried out. Thus, the energy saving effect can be obtained, and the polymer electrolyte layer can be prevented from being excessively dried.

Moreover, the fuel cell system according to the present invention may further include: a purge gas supplying passage having a downstream end connected to the gas circulating passage; and a purge gas supplying device connected to an upstream end of the purge gas supplying passage, wherein the controller may control the purge gas supplying device.

With this, by supplying the purge gas from the purge gas supplying device to the purge gas circulating passage while the fuel cell system stops, the moisture retained by the cathode and the anode during the operation is absorbed and removed by the dry purge gas. Therefore, the gas diffusivity of the gas diffusion layer can be recovered, and the deterioration of the CO poisoning resistance of the anode which has deteriorated by the operation can be recovered. Further, even in a case where the ambient temperature of the fuel cell system is low (for example, 0°C or lower), the moisture retained by the cathode and the anode during the electric power generation is absorbed and removed by the dry purge gas, so that damages and the like of the polymer electrolyte membrane due to freezing of the moisture remaining in the fuel cell can be suppressed.

Moreover, in the fuel cell system according to the present invention, in a stop operation of the fuel cell system, the controller may cause the second three-way valve to connect the part of the second portion, which part is located on the side where the moisture exchanger is provided, with the gas discharging passage and may cause the oxidizing gas supplying device to supply the oxidizing gas, after that, the controller may cause the purge gas supplying device to supply the purge gas to purge the gas in the oxidizing gas internal channel and the oxidizing gas discharging passage, after that, the controller may cause the first three-way valve to connect the part of the first portion, which part is located on the side where the moisture exchanger is provided, with the first connecting point of the oxidizing gas supplying passage, after that, the controller may cause the purge gas supplying device to stop supply of the purge gas, and after that, the controller may cause the air blower to operate to circulate the purge gas through the gas circulating passage.

Moreover, the fuel cell system according to the present invention may further include a temperature detector configured to detect a temperature of the fuel cell, wherein in a case where the temperature of the fuel cell detected by the temperature detector is equal to or lower than a preset threshold, the controller may cause the oxidizing gas supplying device to stop supply of the oxidizing gas and may cause the air blower to stop circulation of the purge gas.

Moreover, the fuel cell system according to the present invention may further include a pressure detector configured to detect a pressure of the gas in the purge gas circulating passage, wherein in a case where the pressure in the gas circulating passage detected by the pressure detector is a negative pressure, the controller may cause the purge gas supplying device to supply the purge gas to carry out a pressure compensation.

Moreover, the fuel cell system according to the present invention may further include a storage portion configured to store the number of times of executions of the pressure compensation, wherein in a case where the number of times of executions of the pressure compensation is equal to or larger than a predetermined number of times, the controller may cause the oxidizing gas supplying device to stop supply of the oxidizing gas and may cause the air blower to stop circulation of the purge gas.

Moreover, the fuel cell system according to the present invention may further include: a material supplying device configured to supply a material gas; a fuel processor configured to reform the material gas to generate the fuel gas; and a material gas supplying passage connecting the material supplying device and the fuel processor, wherein the purge gas supplying device may be the material supplying device.

Moreover, in the fuel cell system according to the present invention, the purge gas may be a hydrogen gas.

Further, in the fuel cell system according to the present invention, the moisture exchanger may be a total enthalpy heat exchanger.

Moreover, a method for a fuel cell system according to the present invention is a method for operating a fuel cell system, the fuel cell system including: a fuel cell including an anode containing a catalyst and having gas diffusivity, a cathode containing a catalyst and having gas diffusivity, a fuel gas internal channel formed such that a fuel gas flows while contacting the anode, and an oxidizing gas internal channel formed such that an oxidizing gas flows while contacting the cathode; an oxidizing gas supplying passage having a downstream end communicated with an upstream end of the oxidizing gas internal channel; an oxidizing gas supplying device connected to an upstream end of the oxidizing gas supplying passage and configured to supply the oxidizing gas through the oxidizing gas supplying passage to the oxidizing gas internal channel; an oxidizing gas discharging passage having an upstream end communicated with a downstream end of the oxidizing gas internal channel; a moisture exchanger disposed on both the oxidizing gas supplying passage and the oxidizing gas discharging passage and configured to exchange moisture between the oxidizing gas flowing through the oxidizing gas supplying passage and a gas flowing through the oxidizing gas discharging passage; a gas circulating passage forming/canceling device configured to form or cancel a closed gas circulating passage by connecting or separating a portion (hereinafter referred to as a first portion) of the oxidizing gas discharging passage which portion is located downstream of the moisture exchanger with or from a first connecting point of the oxidizing gas supplying passage which point is located downstream of the moisture exchanger; an air blower configured to circulate a gas through the gas circulating passage; an atmosphere communicating/closing device configured to cause a portion (hereinafter referred to as a second portion) of the oxidizing gas supplying passage, which portion extends between the first connecting point and the moisture exchanger, to be communicated with atmosphere or to be closed; and a gas discharging passage through which the second portion of the oxidizing gas supplying passage is communicated with the atmosphere, the method including the steps of: in a stop operation of the fuel cell system, causing the gas circulating passage forming/canceling device to connect a part of the first portion, which part is located on a side where the moisture exchanger is provided, with the first connecting point of the oxidizing gas supplying passage; causing the atmosphere communicating/closing device to connect a part of the second portion, which part is located on a side where the moisture exchanger is provided, with the gas discharging passage; and causing the oxidizing gas supplying device to supply the oxidizing gas.

With this, while the fuel cell system stops, the moisture retained by the gas in the gas circulating passage is absorbed and removed in the moisture exchanger by the dry oxidizing gas supplied from the oxidizing gas supplying device. Therefore, by circulating the gas in the gas circulating passage, the moisture retained by the cathode and the anode during the operation can be removed. On this account, the gas diffusivity of the gas diffusion layer can be recovered, and the deterioration of the CO poisoning resistance of the anode which has deteriorated by the operation can be recovered. Further, even in a case where the ambient temperature of the fuel cell system is low (for example, 0°C or lower), the moisture retained by the cathode and the anode during the electric power generation is absorbed and removed by the dry oxidizing gas, so that damages and the like of the polymer electrolyte membrane due to freezing of the moisture remaining in the fuel cell can be suppressed.

Further, a method for operating a fuel cell system according to the present invention is a method for operating a fuel cell system, the fuel cell system including: a fuel cell including an anode containing a catalyst and having gas diffusivity, a cathode containing a catalyst and having gas diffusivity, a fuel gas internal channel formed such that a fuel gas flows while contacting the anode, and an oxidizing gas internal channel formed such that an oxidizing gas flows while contacting the cathode; an oxidizing gas supplying passage having a downstream end communicated with an upstream end of the oxidizing gas internal channel; an oxidizing gas supplying device connected to an upstream end of the oxidizing gas supplying passage and configured to supply the oxidizing gas through the oxidizing gas supplying passage to the oxidizing gas internal channel; an oxidizing gas discharging passage having an upstream end communicated with a downstream end of the oxidizing gas internal channel; a moisture exchanger disposed on both the oxidizing gas supplying passage and the oxidizing gas discharging passage and configured to exchange moisture between the oxidizing gas flowing through the oxidizing gas supplying passage and a gas flowing through the oxidizing gas discharging passage; a gas circulating passage forming/canceling device configured to form or cancel a closed gas circulating passage by connecting or separating a portion (hereinafter referred to as a first portion) of the oxidizing gas discharging passage which portion is located downstream of the moisture exchanger with or from a first connecting point of the oxidizing gas supplying passage which point is located downstream of the moisture exchanger; a gas discharging passage through which the second portion of the oxidizing gas supplying passage is communicated with atmosphere; a purge gas supplying passage having a downstream end connected to the gas circulating passage; a purge gas supplying device connected to an upstream end of the purge gas supplying passage; an air blower configured to circulate the purge gas through the gas circulating passage; and an atmosphere communicating/closing device configured to cause a portion (hereinafter referred to as a second portion) of the oxidizing gas supplying passage, which portion extends between the first connecting point and the moisture exchanger, to be communicated with the atmosphere or to be closed, the method including the steps of: in a stop operation of the fuel cell system, causing the atmosphere communicating/closing device to connect a part of the second portion, which part is located on a side where the moisture exchanger is provided, with the gas discharging passage; causing the oxidizing gas supplying device to supply the oxidizing gas; causing the purge gas supplying device to supply the purge gas to purge the gas in the oxidizing gas internal channel and the oxidizing gas discharging passage; causing the gas circulating passage forming/canceling device to connect a part of the first portion, which part is located on a side where the moisture exchanger is provided, with the first connecting point of the oxidizing gas supplying passage; causing the purge gas supplying device to stop supply of the purge gas; and causing the air blower to operate to circulate the purge gas through the gas circulating passage.

With this, by supplying the purge gas from the purge gas supplying device to the oxidizing gas internal channel while the fuel cell system stops, the moisture retained by the cathode and the anode during the operation is absorbed and removed by the dry purge gas. Therefore, the gas diffusivity of the gas diffusion layer can be recovered, and the deterioration of the CO poisoning resistance of the anode which has deteriorated by the operation can be recovered. Further, even in a case where the ambient temperature of the fuel cell system is low (for example, 0°C or lower), the moisture retained by the cathode and the anode during the electric power generation is absorbed and removed by the dry purge gas, so that damages and the like of the polymer electrolyte membrane due to freezing of the moisture remaining in the fuel cell can be suppressed.

The above object, other objects, features and advantages of the present invention will be made clear by the following detailed explanation of preferred embodiments with reference to the attached drawings.

### Effects of the Invention

In accordance with the fuel cell system of the present invention and the method for using the fuel cell system, the CO poisoning resistance of the anode can be adequately recovered. In addition, the gas diffusivity of the electrode of the fuel cell can be recovered. With this, the power generation efficiency of the fuel cell can be maintained, and the reliability of the fuel cell system can be improved.

### Brief Description of the Drawings

[Fig. 1] Fig. 1 is a schematic diagram showing a schematic configuration of a fuel cell system according to Embodiment 1 of the present invention.
[Fig. 2] Fig. 2 is a cross-sectional view schematically showing a schematic configuration of a cell stack of a fuel cell in the fuel cell system shown in Fig. 1.
[Fig. 3] Fig. 3 is a flow chart schematically showing steps of a stop operation program stored in a storage portion of a controller in the fuel cell system shown in Fig. 1.
[Fig. 4] Fig. 4 is a diagram schematically showing the flow of each of a purge gas and an oxidizing gas in a stop operation of the fuel cell system shown in Fig. 1.
[Fig. 5] Fig. 5 is a diagram schematically showing the flow of each of the purge gas and the oxidizing gas in the stop operation of the fuel cell system shown in Fig. 1.
[Fig. 6] Fig. 6 is a schematic diagram showing a schematic configuration of the fuel cell system according to Embodiment 2 of the present invention.
[Fig. 7] Fig. 7 is a flow chart schematically showing steps of the stop operation program stored in the storage portion of the controller in the fuel cell system according to Embodiment 2.
[Fig. 8] Fig. 8 is a schematic diagram showing a schematic configuration of the fuel cell system according to Embodiment 3 of the present invention.
[Fig. 9] Fig. 9 is a flow chart schematically showing steps of the stop operation program stored in the storage portion of the controller in the fuel cell system according to Embodiment 3.
[Fig. 10] Fig. 10 is a schematic diagram showing a schematic configuration of the fuel cell system according to Embodiment 4 of the present invention.
[Fig. 11] Fig. 11 is a flow chart schematically showing steps of the stop operation program stored in the storage portion of the controller in the fuel cell system according to Embodiment 4.
[Fig. 12] Fig. 12 is a schematic diagram showing a schematic configuration of the fuel cell system according to Embodiment 5 of the present invention.
[Fig. 13] Fig. 13 is a schematic diagram showing a schematic configuration of the fuel cell system according to Embodiment 6 of the present invention.
[Fig. 14] Fig. 14 is a flow chart schematically showing steps of the stop operation program stored in the storage portion of the controller in the fuel cell system according to Embodiment 6.
[Fig. 15] Fig. 15 is a schematic diagram showing a schematic configuration of the fuel cell system according to Embodiment 7 of the present invention.
[Fig. 16] Fig. 16 is a flow chart schematically showing steps of the stop operation program stored in the storage portion of the controller in the fuel cell system according to Embodiment 7.

### Explanation of Reference Numbers

- 1: polymer electrolyte membrane
- 2a: anode
- 2b: cathode
- 3: MEA (Membrane-Electrode Assembly)
- 4: gasket
- 5a: anode separator
- 5b: cathode separator
- 6: fuel gas channel
- 7: oxidizing gas channel
- 8: first heat medium channel
- 9: cell
- 10: fuel cell
- 11: fuel gas internal channel
- 12: oxidizing gas internal channel
- 13: first heat medium internal channel
- 21: material gas supplying device (purge gas supplying device)
- 21a: hydrogen storage tank
- 22: fuel processor
- 23: burner
- 24: condenser
- 25: water tank
- 26: check valve
- 27: second pump
- 31: oxidizing gas supplying device
- 32: total enthalpy heat exchanger (moisture exchanger)
- 32a: primary passage
- 32b: secondary passage
- 33: first switching valve (atmosphere communicating/closing device; second three-way valve)
- 33a: first port
- 33b: second port
- 33c: third port
- 34: second switching valve (gas circulating passage forming/canceling device; first three-way valve)
- 34a: first port
- 34b: second port
- 34c: third port
- 35: first pump (air blower)
- 36: purge gas on-off valve
- 41: heat exchanger
- 41a: primary passage
- 41b: secondary passage
- 42: hot-water tank
- 51: material gas supplying passage
- 52: purge gas supplying passage
- 53: fuel gas supplying passage
- 54: fuel gas discharging passage
- 55: off gas supplying passage
- 61: first oxidizing gas supplying passage
- 62: second oxidizing gas supplying passage (second portion)
- 62a: second oxidizing gas supplying passage upstream portion
- 62b: second oxidizing gas supplying passage downstream portion
- 63: gas discharging passage
- 64: third oxidizing gas supplying passage
- 64a: third oxidizing gas supplying passage upstream portion
- 64b: third oxidizing gas supplying passage downstream portion
- 65: oxidizing gas discharging passage upstream portion
- 66: oxidizing gas discharging passage midstream portion
- 67: oxidizing gas discharging passage downstream portion
- 68: connecting passage
- 69: first connecting point
- 70: second connecting point
- 71a: first heat medium outward route
- 71b: first heat medium return route
- 72a: second heat medium outward route
- 72b: second heat medium return route
- 73: condensed water supplying passage
- 74: reform water supplying passage
- 81: controller
- 82: voltage detector
- 83: electric wire
- 84: temperature detector
- 85: pressure detector
- 90: cell stack
- 100: fuel cell system

### Best Mode for Carrying Out the Invention

Hereinafter, preferred embodiments of the present invention will be explained in reference to the drawings. In the drawings, the same reference numbers are used for the same or corresponding portions, and a repetition of the same explanation is avoided.

### Embodiment 1

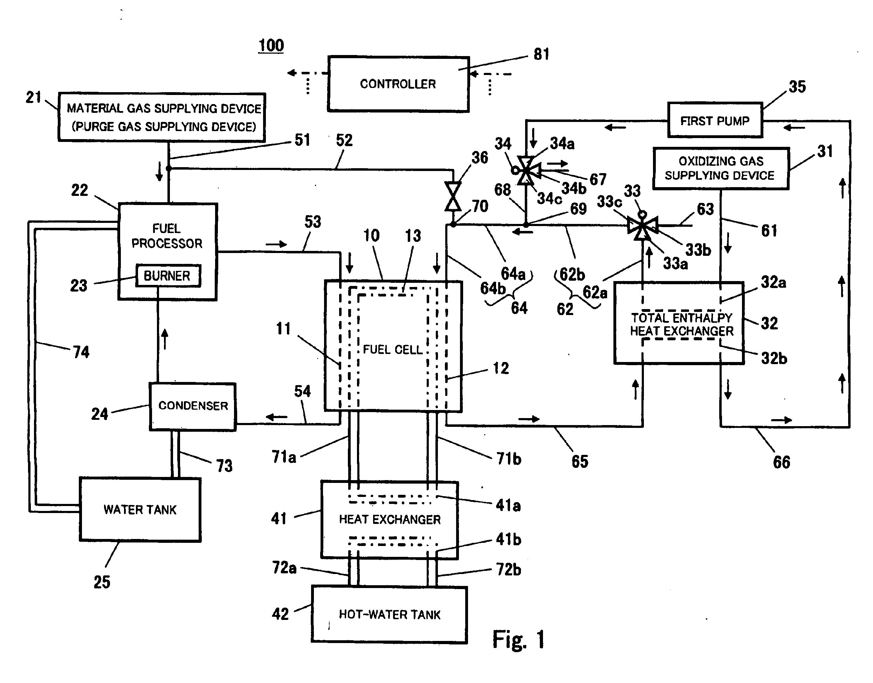

Fig. 1 is a schematic diagram showing a schematic configuration of a fuel cell system according to Embodiment 1 of the present invention and schematically shows the flow of each reactant gas when a fuel cell is generating electric power.

### Configuration of Fuel Cell System

As shown in Fig. 1, a fuel cell system 100 according to Embodiment 1 includes a fuel cell 10, a fuel gas supplying system, an oxidizing gas supplying system, a cooling system, and a controller 81. The fuel gas supplying system is configured to supply a fuel gas to the fuel cell 10 and includes a material gas supplying device (purge gas supplying device) 21, a fuel processor (fuel gas supplying device) 22, and a condenser 24. The oxidizing gas supplying system is configured to supply an oxidizing gas to the fuel cell 10 and includes an oxidizing gas supplying device 31 and a total enthalpy heat exchanger (moisture exchanger) 32.

First, the configuration of the fuel cell 10 will be explained.

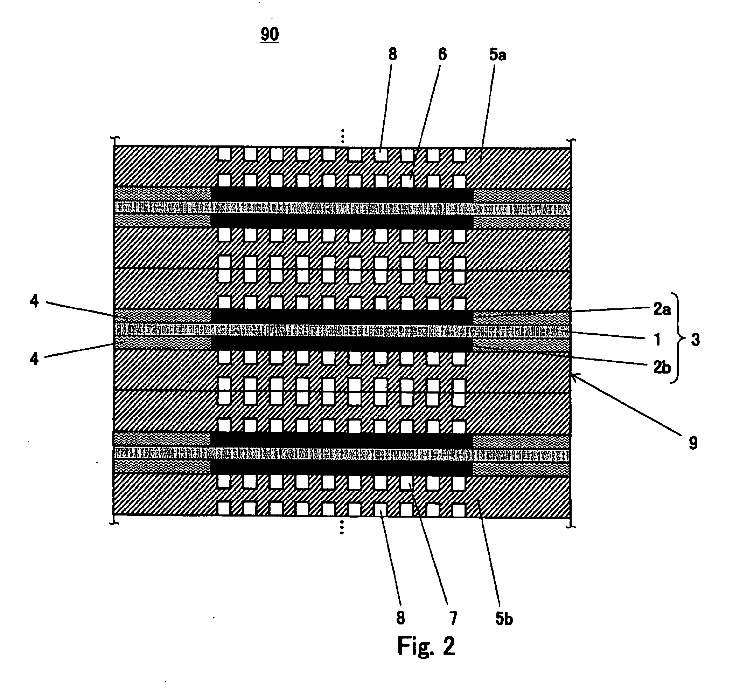

Herein, the fuel cell 10 is constituted by a polymer electrolyte fuel cell. The fuel cell 10 is constituted by a cell stack formed by stacking plate-shaped cells 9 in a thickness direction of the cell 9. Here, the cell 9 will be explained in reference to Fig. 2.

Fig. 2 is a cross-sectional view schematically showing a schematic configuration of the cell stack of the fuel cell 10 in the fuel cell system 100 shown in Fig. 1.

As shown in Fig. 2, the cell 9 includes a MEA 3 (Membrane-Electrode Assembly; polymer electrolyte layer-electrode stack body), gaskets 4, an anode separator 5a, and a cathode separator 5b. The MEA 3 includes a polymer electrolyte membrane (polymer electrolyte layer) 1 which selectively transports hydrogen ions, an anode 2a, and a cathode 2b. The anode 2a and the cathode 2b (each of which is referred to as a "gas diffusion electrode") are respectively disposed on both surfaces of the polymer electrolyte membrane 1 such that each of the anode 2a and the cathode 2b is located on not a peripheral portion of the surface thereof but an inner region of the surface thereof. Each of the anode 2a and the cathode 2b includes a catalyst layer (not shown) and a gas diffusion layer (not shown). The catalyst layer contains, as a major component, carbon powder supporting a platinum-based metal catalyst. The gas diffusion layer is disposed on the catalyst layer and has both gas permeability and electrical conductivity.

Moreover, a pair of ring-shaped gaskets 4 made of rubber are respectively disposed around the anode 2a and the cathode 2b so as to sandwich the polymer electrolyte membrane 1. The anode separator 5a and the cathode separator 5b each having the electrical conductivity are disposed to sandwich the MEA 3 and the gaskets 4. A groove-like fuel gas channel 6 through which the fuel gas flows is formed on a main surface (hereinafter referred to as an "inner surface") of the anode separator 5a which surface contacts the MEA 3. A groove-like oxidizing gas channel 7 through which the oxidizing gas flows is formed on a main surface (hereinafter referred to as an "inner surface") of the cathode separator 5b which surface contacts the MEA 3. Moreover, a first heat medium channel 8 through which a first heat medium for adjusting a temperature inside the cell stack to an appropriate temperature flows is formed on an outer surface of each of the anode separator 5a and the cathode separator 5b (hereinafter respectively referred to as "separators 5a and 5b").

A fuel gas supplying manifold hole, a fuel gas discharging manifold hole, an oxidizing gas supplying manifold hole, an oxidizing gas discharging manifold hole, a first heat medium supplying manifold hole, and a first heat medium discharging manifold hole (all of which are not shown) which are through holes extending in a thickness direction are formed at a peripheral portion of each of the polymer electrolyte membrane 1, the gaskets 4, and the separators 5a and 5b.

The cells 9 formed as above are stacked in the thickness direction to form a cell stack body. A current collector, an insulating plate, and an end plate (all of which are not shown) are disposed on each of both ends of the cell stack body, and these components are fastened by fastening members (not shown) to form a cell stack 90. At this time, the manifold holes, such as the fuel gas supplying manifold hole, formed on the polymer electrolyte membrane 1, the gaskets 4, and the separators 5a and 5b are connected to one another in the thickness direction by stacking the cells 9 to form manifolds, such as a fuel gas supplying manifold. The fuel gas supplying manifold, a fuel gas discharging manifold, and the fuel gas channel 6 which is formed on each of the anode separators 5a to connect the fuel gas supplying manifold and the fuel gas discharging manifold constitute a fuel gas internal channel 11 (see Fig. 1). An oxidizing gas supplying manifold, an oxidizing gas discharging manifold, and the oxidizing gas channel 7 which is formed on each of the cathode separators 5b to connect the oxidizing gas supplying manifold and the oxidizing gas discharging manifold constitute an oxidizing gas internal channel 12 (see Fig. 1). A first heat medium supplying manifold, a first heat medium discharging manifold, and a first heat medium channel 8 which connects the first heat medium supplying manifold and the first heat medium discharging manifold constitute a first heat medium internal channel 13 (see Fig. 1).

Next, the configuration of the fuel gas supplying system will be explained in reference to Fig. 1.

The fuel gas supplying system includes a material gas supplying passage 51. The material gas supplying device (purge gas supplying device) 21 is disposed at an upstream end of the material gas supplying passage 51. Here, used as the material gas is the city gas containing methane as a major component. An entrance of the material gas supplying device 21 is connected to a city gas pipe (not shown). The material gas supplying device 21 includes a desulfurizer and a plunger pump, which are not shown. The desulfurizer adsorbs and removes (desulfrizes) a sulfur compound contained in the material gas as an odorant. The plunger pump causes the desulfrized material gas to flow to the material gas supplying passage 51 while adjusting the flow rate of the material gas.

The fuel processor 22 is connected to a downstream end of the material gas supplying passage 51. Herein, the material gas supplying device and the purge gas supplying device are constituted by a single device. However, the present embodiment is not limited to this. The material gas supplying device and the purge gas supplying device may be constituted separately.

The fuel processor 22 includes a reformer, a shift converter, and a purifier (all of which are not shown) arranged in this order in a flow direction of a processed gas. The reformer includes a reforming catalyst, and the material gas supplying passage 51 is connected to an entrance of the reformer. The reformer is provided with a burner 23. The burner 23 combusts an off gas (described later) supplied from the fuel cell 10, using combustion air supplied from a combustion air supplying device (not shown). Then, the reformer utilizes heat transfer of the combustion gas generated in the burner 23 to cause a reforming reaction between the material gas supplied through the material gas supplying passage 51 and water supplied from a below-described water tank 25. Thus, the reformer generates a hydrogen-rich reformed gas. The shift converter and the purifier causes a shift reaction and a selective reaction of the reformed gas generated in the reformer to generate the fuel gas (containing steam) in which the carbon monoxide is 10 ppm or less.

An upstream end of a fuel gas supplying passage 53 is connected to an exit of the purifier of the fuel processor 22, and a downstream end thereof is connected to an entrance of the fuel gas internal channel 11 (to be precise, the fuel gas supplying manifold) of the fuel cell 10. With this, the fuel gas generated in the fuel processor 22 is supplied to the anode 2a in the fuel cell 10 and reacts with the oxidizing gas separately supplied to the cathode 2b to generate water, electricity, and heat.

An upstream end of a fuel gas discharging passage 54 is connected to an exit of the fuel gas internal channel 11 (to be precise, the fuel gas discharging manifold) of the fuel cell 10, and a downstream end thereof is connected to the burner 23. The condenser 24 is disposed on a portion of the fuel gas discharging passage 54. With this, the unreacted fuel gas and the moisture (steam and water) flow through the fuel gas discharging passage 54 to the condenser 24.

The condenser 24 is configured to condense steam into water to separate the unreacted fuel gas and the moisture. Then, the unreacted fuel gas separated in the condenser 24 is supplied to the burner 23 as the off gas and combusted in the burner 23 as described above.

Impurities of the separated moisture are filtered in the condenser 24, and the moisture is then supplied through a condensed water supplying passage 73 to the water tank 25. An upstream end of a reform water supplying passage 74 is connected to the water tank 25, and a downstream end thereof is connected to the reformer of the fuel processor 22. With this, the water is supplied from the water tank 25 to the reformer of the fuel processor 22 and is used for the reforming reaction. Herein, the water used for the reforming reaction is supplied from the water tank 25. However, the present embodiment is not limited to this, and a means for supplying the water to the reformer may be separately provided.

Next, the configuration of the oxidizing gas supplying system will be explained in reference to Fig. 1.

The oxidizing gas supplying system includes the oxidizing gas supplying device 31. Herein, used as the oxidizing gas is air. For example, the oxidizing gas supplying device 31 is constituted by a blower. An upstream end of a first oxidizing gas supplying passage 61 is connected to the oxidizing gas supplying device 31, and a downstream end thereof is connected to an entrance of a primary passage 32a of the total enthalpy heat exchanger 32. An upstream end of a second oxidizing gas supplying passage upstream portion 62a is connected to an exit of the primary passage 32a of the total enthalpy heat exchanger 32, and a downstream end thereof is connected to a first port 33a of a first switching valve (atmosphere communicating/closing device; second three-way valve) 33 that is a three-way valve. A gas discharging passage 63 is connected to a second port 33b of the first switching valve 33. An upstream end of a second oxidizing gas supplying passage downstream portion 62b is connected to a third port 33c of the first switching valve 33, and a downstream end thereof is connected to an upstream end of a third oxidizing gas supplying passage 64. A downstream end of the third oxidizing gas supplying passage 64 is connected to an entrance of the oxidizing gas internal channel 12 (to be precise, the oxidizing gas supplying manifold) of the fuel cell 10. With this, in a case where each of the first switching valve 33 and a below-described second switching valve 34 is in a predetermined switching state, the oxidizing gas is supplied through the oxidizing gas supplying device 31 to the cathode 2b of the fuel cell 10 to react with the fuel gas supplied to the anode 2a as described above, thereby generating water, electricity, and heat. The second oxidizing gas supplying passage upstream portion 62a and the second oxidizing gas supplying passage downstream portion 62b constitute a second oxidizing gas supplying passage (a second portion of an oxidizing gas supplying passage) 62, and the first to third oxidizing gas supplying passages 61, 62, and 64 constitute the oxidizing gas supplying passage.

An upstream end of an oxidizing gas discharging passage upstream portion 65 is connected to an exit of the oxidizing gas internal channel 12 (to be precise, the oxidizing gas discharging manifold) of the fuel cell 10, and a downstream end thereof is connected to an entrance of a secondary passage 32b of the total enthalpy heat exchanger 32. An upstream end of an oxidizing gas discharging passage midstream portion (a first portion of an oxidizing gas discharging passage) 66 is connected to an exit of the secondary passage 32b of the total enthalpy heat exchanger 32, and a downstream end thereof is connected to a first port 34a of the second switching valve (gas circulating passage forming/canceling device; first three-way valve) 34 that is a three-way valve. Then, an oxidizing gas discharging passage downstream portion 67 is connected to a second port 34b of the second switching valve 34. With this, in the total enthalpy heat exchanger 32, the oxidizing gas (hereinafter referred to as "supply oxidizing gas") supplied from the oxidizing gas supplying device 31 to the fuel cell 10 exchanges the heat with the oxidizing gas (hereinafter referred to as "discharge oxidizing gas") discharged from the fuel cell 10. In addition, the moisture contained in the discharge oxidizing gas moves to the supply oxidizing gas, so that the supply oxidizing gas is humidified. Then, the discharge oxidizing gas is discharged through the oxidizing gas discharging passage downstream portion 67 to the outside of the fuel cell system 100. A first pump (air blower) 35 is disposed on a portion of the oxidizing gas discharging passage midstream portion 66. A known pump can be used as the first pump 35. Herein, the first pump 35 is disposed on a portion of the oxidizing gas discharging passage midstream portion 66. However, the present embodiment is not limited to this. The first pump 35 may be disposed anywhere on a portion of passages constituting a below-described purge gas circulating passage. In Embodiment 1, the pump is shown as the air blower. However, the present embodiment is not limited to this. For example, a blower, a fan, or the like may be used.

An upstream end of a connecting passage 68 is connected to a third port 34c of the second switching valve 34, and a downstream end thereof is connected to the upstream end of the third oxidizing gas supplying passage 64. A connecting point where the third oxidizing gas supplying passage 64 and the connecting passage 68 are connected to each other is referred to as a first connecting point 69. The downstream end of the second oxidizing gas supplying passage downstream portion 62b is connected to the first connecting point 69.

A downstream end of a purge gas supplying passage 52 having the upstream end connected to the material gas supplying passage 51 is connected to a portion of the third oxidizing gas supplying passage 64 which portion is located between the first connecting point 69 and the downstream end of the third oxidizing gas supplying passage 64. A purge gas on-off valve 36 is disposed on a portion of the purge gas supplying passage 52. A connecting point where the third oxidizing gas supplying passage 64 and the purge gas supplying passage 52 are connected to each other is referred to as a second connecting point 70. A portion extending from the first connecting point 69 to the second connecting point 70 of the third oxidizing gas supplying passage 64 is referred to as a third oxidizing gas supplying passage upstream portion 64a. A portion extending from the second connecting point 70 to the downstream end of the third oxidizing gas supplying passage 64 is referred to as a third oxidizing gas supplying passage downstream portion 64b.

Then, the connecting passage 68, the third oxidizing gas supplying passage 64, the oxidizing gas internal channel 12, the oxidizing gas discharging passage upstream portion 65, the secondary passage 32b, and the oxidizing gas discharging passage midstream portion 66 constitute the purge gas circulating passage (gas circulating passage). The flow of the gas in the purge gas circulating passage will be described later.

Next, the configuration of the cooling system will be explained in reference to Fig. 1.

The cooling system includes a first heat medium outward route 71a. An upstream end of the first heat medium outward route 71a is connected to an exit of the first heat medium internal channel 13 of the fuel cell 10, and a downstream end thereof is connected to an entrance of a primary passage 41a of a heat exchanger 41. An exit of the primary passage 41a of the heat exchanger 41 is connected to an entrance of the first heat medium internal channel 13 through a first heat medium return route 71b. A pump (not shown) is disposed on the first heat medium outward route 71a, and a first heat medium circulates through the first heat medium internal channel 13, the first heat medium outward route 71a, the primary passage 41a, and the first heat medium return route 71b.

A downstream end of a second heat medium outward route 72a is connected to an entrance of a secondary passage 41b of the heat exchanger 41, and an upstream end of a second heat medium return route 72b is connected to an exit of the secondary passage 41b. An upstream end of the second heat medium outward route 72a and a downstream end of the second heat medium return route 72b are connected to a hot-water tank 42. A pump (not shown) is disposed on the second heat medium outward route 72a, and a second heat medium circulates through the hot-water tank 42, the second heat medium outward route 72a, the secondary passage 41b, and the second heat medium return route 72b.

With this, the first heat medium recovers exhaust heat from the fuel cell 10 and exchanges the heat with the second heat medium in the heat exchanger 41. Thus, the fuel cell 10 is cooled down and maintained at an appropriate temperature, and the recovered exhaust heat is accumulated in the hot-water tank to be utilized for a predetermined purpose. Herein, water is used as the first heat medium and the second heat medium. Although the water is used as the first heat medium, for example, an antifreezing fluid containing ethylene glycol or the like may be used.

Next, the controller 81 will be explained.

The controller 81 is constituted by a computer, such as a microcomputer, and includes a calculation processing portion constituted by a CPU and the like, a storage portion constituted by a memory and the like, and a clock portion (all of which are not shown). The calculation processing portion reads out and executes a predetermined control program stored in the storage portion to carry out various control operations of the fuel cell system 100. Moreover, the calculation processing portion processes data stored in the storage portion.

Here, in the present specification, a controller denotes not only a single controller but also a group of a plurality of controllers which execute the control operations of the fuel cell system in cooperation with one another. Therefore, the controller 81 does not have to be constituted by a single controller and may be constituted by a plurality of controllers which are dispersively arranged to control the fuel cell system in cooperation with one another.

### Operation (Operating Method) of Fuel Cell System

First, a common operation (operating method) of the fuel cell 10 of the fuel cell system 100 according to Embodiment 1 during the electric power generation will be explained in reference to Fig. 1. The following operations are executed such that the controller 81 controls the fuel cell system 100.

During the electric power generation, the purge gas on-off valve 36 is closed to prevent the material gas (purge gas) from flowing through the third oxidizing gas supplying passage 64. Moreover, the first switching valve 33 causes the first port 33a to be communicated with the third port 33c and closes the second port 33b. Thus, the supply oxidizing gas flows through the second and third oxidizing gas supplying passages 62 and 64. Further, the second switching valve 34 causes the first port 34a to be communicated with the second port 34b and closes the third port 34c. Thus, the discharge oxidizing gas is discharged through the oxidizing gas discharging passage downstream portion 67 to the outside of the fuel cell system 100.

With this, as shown in Fig. 1, the material gas is supplied from the material gas supplying device 21 to the fuel processor 22, and the fuel gas is then generated. The generated fuel gas flows through the fuel gas supplying passage 53 to be supplied to the anode 2a of the fuel cell 10. Moreover, the oxidizing gas flows from the oxidizing gas supplying device 31 through the first oxidizing gas supplying passage 61, the primary passage 32a, and the second and third oxidizing gas supplying passages 62 and 64 in this order to be supplied to the cathode 2b of the fuel cell 10. At this time, as described above, the supply oxidizing gas exchanges the heat and the moisture with the discharge oxidizing gas in the total enthalpy heat exchanger 32.

The fuel gas and the oxidizing gas supplied to the fuel cell 10 react with each other therein to generate water. Moreover, the unreacted fuel gas is supplied through the fuel gas discharging passage 54 to be supplied to the condenser 24 and is separated from the moisture to be supplied to the burner 23 as the off gas. The unreacted oxidizing gas flows through the oxidizing gas discharging passage upstream portion 65, the secondary passage 32b, the oxidizing gas discharging passage midstream portion 66, and the oxidizing gas discharging passage downstream portion 67 in this order to be discharged to the outside of the fuel cell system 100.

Moreover, in the fuel cell 10, the first heat medium is supplied through the first heat medium return route 71b to the first heat medium internal channel 13, so that the inside of the fuel cell 10 is maintained at a predetermined temperature. Specifically, the first heat medium circulates through the first heat medium return route 71b, the first heat medium internal channel 13, the first heat medium outward route 71a, and the primary passage 41a in this order, and the first heat medium flowing through the primary passage 41a exchanges the heat with the second heat medium flowing through the secondary passage. Thus, the inside of the fuel cell 10 is maintained at a predetermined temperature. The second heat medium which has exchanged the heat with the first heat medium is heated by a heater, not shown, and is supplied through the second heat medium return route 72b to the hot-water tank 42. Thus, the second heat medium is supplied to a used as hot water.

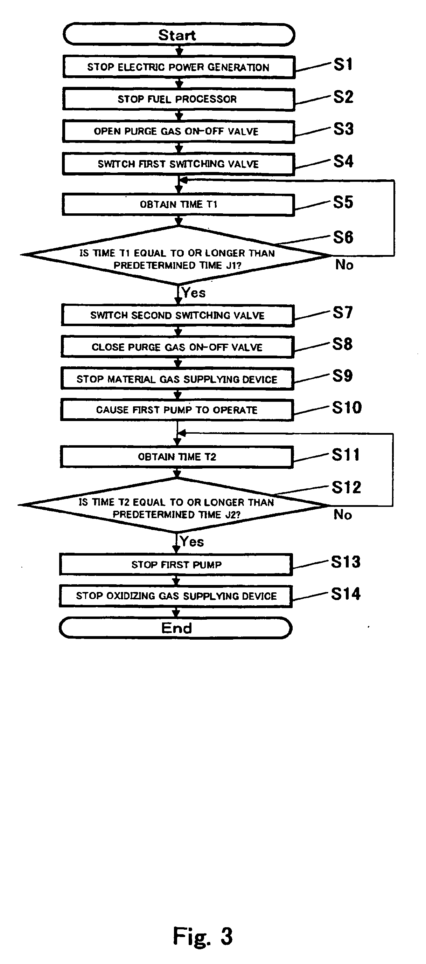

Next, a stop operation of the fuel cell system 100 will be explained in reference to Figs. 3 to 5.

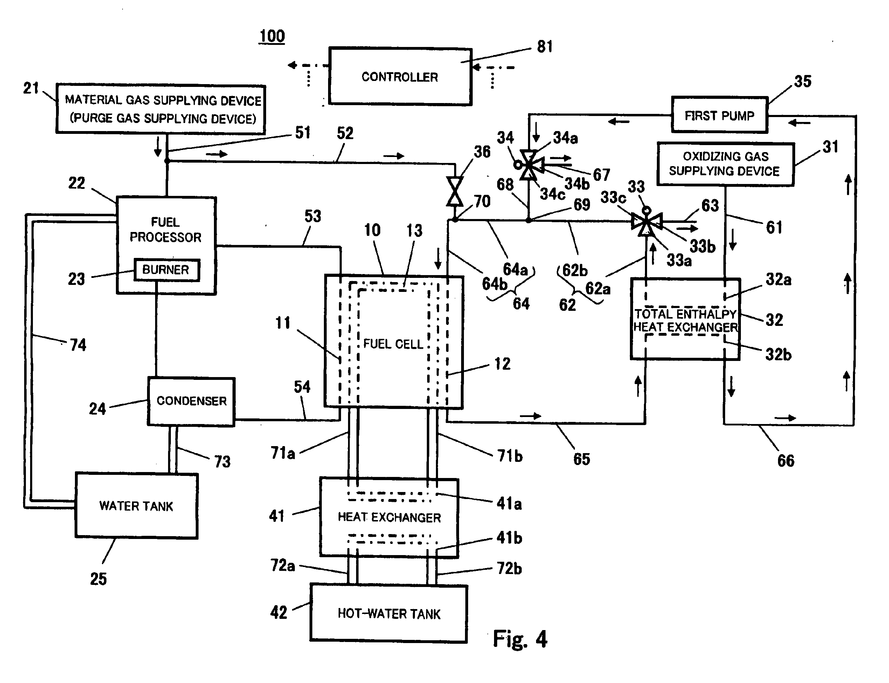

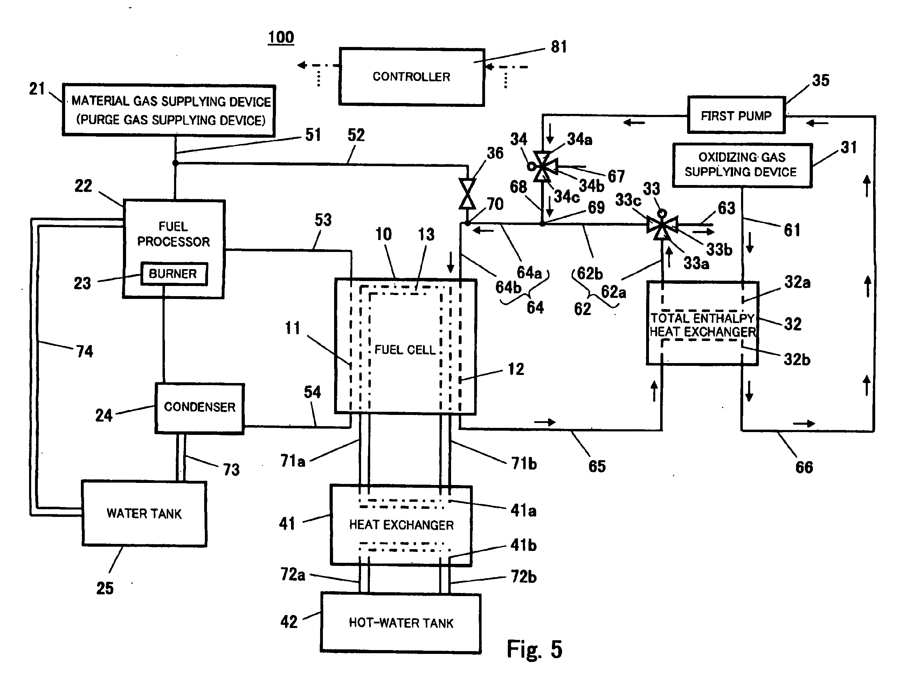

Fig. 3 is a flow chart schematically showing steps of a stop operation program stored in the storage portion of the controller 81 in the fuel cell system 100 shown in Fig. 1. Each of Figs. 4 and 5 is a diagram schematically showing the flow of the purge gas and the flow of the oxidizing gas in the stop operation of the fuel cell system shown in Fig. 1.

First, the calculation processing portion of the controller 81 stops the electric power generation and starts the stop operation (Step S1). In the present invention, the stop operation is defined as an operation from when the controller 81 outputs a stop signal until when the fuel cell system 100 stops operating. The controller 81 outputs the stop signal when a stop command is input by a stop button and when there is no electric power generation demand from a load. Moreover, the stop of the electric power generation is carried out by setting the output of an inverter, not shown, configured to output the generated electric power of the fuel cell 10 to the outside to zero and electrically separating the fuel cell 10 from the load by the inverter.

Next, the calculation processing portion outputs the stop command to the fuel processor 22 (Step S2). With this, the fuel processor 22 stops supplying the fuel gas to the anode 2a of the fuel cell 10. Next, the calculation processing portion outputs an open command to the purge gas on-off valve 36 (Step S3). With this, the purge gas on-off valve 36 opens, and the material gas supplying passage 51 is communicated with the third oxidizing gas supplying passage 64 through the purge gas supplying passage 52. Next, the calculation processing portion causes the first switching valve 33 to stop the flow of the oxidizing gas from the second oxidizing gas supplying passage upstream portion 62a to the second oxidizing gas supplying passage downstream portion 62b and to allow the oxidizing gas to flow from the second oxidizing gas supplying passage upstream portion 62a to the gas discharging passage 63 (Step S4). Specifically, the first switching valve 33 causes the first port 33a to be communicated with the second port 33b and closes the third port 33c.

With this, the material gas (purge gas) is supplied through the purge gas supplying passage 52, and the oxidizing gas existing in the purge gas circulating passage is purged by the purge gas and discharged through the oxidizing gas discharging passage downstream portion 67 to the outside of the fuel cell system 100. Moreover, the oxidizing gas supplied from the oxidizing gas supplying device 31 flows through the first oxidizing gas supplying passage 61, the primary passage 32a, the second oxidizing gas supplying passage upstream portion 62a, and the gas discharging passage 63 in this order to be discharged to the outside of the fuel cell system 100 (see Fig. 4). At this time, in the total enthalpy heat exchanger 32, the moisture moves from the moisture-containing oxidizing gas or purge gas (gas in the gas circulating passage) existing in the purge gas circulating passage to the dry oxidizing gas supplied from the oxidizing gas supplying device 31 (moisture exchange occurs therebetween). The order of Step S3 and Step S4 may be reversed.

Next, the calculation processing portion of the controller 81 obtains time information T1 from the clock portion (Step S5). Then, the calculation processing portion of the controller 81 determines whether or not a time elapsed since the opening of the purge gas on-off valve 36 is equal to or longer than a predetermined time J1 stored in the storage portion (Step S6). In a case where the elapsed time is shorter than the predetermined time J1, the process returns to Step S5, and Steps S5 and S6 are repeatedly carried out until the elapsed time becomes equal to or longer than the predetermined time J1. In a case where the elapsed time is equal to or longer than the predetermined time J1, the process proceeds to Step S7. The predetermined time J1 is a time it takes to adequately replace the oxidizing gas in the purge gas circulating passage with the purge gas. The predetermined time J1 is obtained in advance by experiments.

In Step S7, the calculation processing portion causes the second switching valve 34 to stop discharging the oxidizing gas through the oxidizing gas discharging passage downstream portion 67 and to allow a small amount of oxidizing gas and purge gas in the gas passages, such as the oxidizing gas discharging passage midstream portion 66, to flow from the oxidizing gas discharging passage midstream portion 66 to a bypass passage 68. Specifically, the second switching valve 34 causes the first port 34a to be communicated with the third port 34c and closes the second port 34b. Next, the calculation processing portion outputs a close command to the purge gas on-off valve 36 (Step S8) and outputs a stop command to the material gas supplying device 21 (Step S9). With this, the material gas supplying device 21 stops supplying the purge gas to the third oxidizing gas supplying passage 64. Thus, the purge gas circulating passage is formed, which is constituted by the connecting passage 68, the third oxidizing gas supplying passage upstream portion 64a, the third oxidizing gas supplying passage downstream portion 64b, the oxidizing gas internal channel 12, the oxidizing gas discharging passage upstream portion 65, the secondary passage 32b, and the oxidizing gas discharging passage midstream portion 66 (see Fig. 5). The order of Steps S7 to S9 can be determined arbitrarily.

Next, the calculation processing portion of the controller 81 outputs an operation command to the first pump 35 (Step S10) to cause the first pump 35 to start operating. With this, the purge gas circulates in the purge gas circulating passage. At this time, the moisture-containing purge gas flowing through the secondary passage 32b of the total enthalpy heat exchanger 32 exchanges the moisture with the dry oxidizing gas flowing through the primary passage 32a and supplied from the oxidizing gas supplying device 31. Thus, the moisture-containing purge gas is dehumidified. The dehumidified purge gas is supplied to the oxidizing gas internal channel 12 of the fuel cell 10. While the purge gas flows through the oxidizing gas internal channel 12, the moisture retained by the cathode 2b of the fuel cell 10 is removed (taken away). Then, the purge gas is dehumidified while flowing through the secondary passage 32b of the total enthalpy heat exchanger 32. Thus, the moisture retained by the cathode 2b of the fuel cell 10 is removed. Moreover, since the moisture retained by the anode 2a moves through the polymer electrolyte membrane 1 to the cathode 2b by a moisture concentration difference between the cathode 2b and the anode 2a, the moisture retained by the anode 2a is also removed.

Next, the calculation processing portion obtains time information T2 from the clock portion (Step S11). Then, the calculation processing portion determines whether or not a time elapsed since the operation start of the first pump 35 is equal to or longer than a predetermined time J2 stored in the storage portion (Step S12). In a case where the elapsed time is shorter than the predetermined time J2, the process returns to Step S11, and Steps S11 and S12 are repeatedly carried out until the elapsed time becomes equal to or longer than the predetermined time J2. In a case where the elapsed time is equal to or longer than the predetermined time J2, the process proceeds to Step S13. The predetermined time J2 is a time it takes to adequately remove the moisture in the purge gas circulating passage and the fuel cell 10 such that the CO poisoning resistance of the anode 2a recovers, the gas diffusivity of the gas diffusion layer recovers, and the polymer electrolyte membrane 1 is prevented from being excessively dried. The predetermined time J2 is obtained in advance by experiments.

In Step S13, the calculation processing portion outputs an operation stop command to the first pump 35. With this, the first pump 35 stops operating, and this stops the circulation of the purge gas in the purge gas circulating passage. Next, the calculation processing portion outputs the operation stop command to the oxidizing gas supplying device 31 (Step S14) to terminate the present program. With this, the oxidizing gas supplying device 31 stops operating, and the fuel cell system 100 stops. The order of Steps S13 and S14 may be reversed.

As above, in the fuel cell system 100 according to Embodiment 1, by removing the moisture in the fuel cell 10 while the fuel cell system 100 stops operating, the CO poisoning resistance of the anode 2a can be adequately recovered, and the gas diffusivity of the gas diffusion layer in each of the anode 2a and the cathode 2b can be recovered while preventing the polymer electrolyte membrane 1 from being excessively dried. Further, in the fuel cell system 100 according to Embodiment 1, even in a case where an ambient temperature (surrounding temperature) of the fuel cell system 100 has become a low temperature (0°C or less for example), the damages and the like of the polymer electrolyte membrane 1 due to the freezing of the moisture remaining in the fuel cell 10 can be suppressed since the moisture retained by the cathode 2b and the anode 2a in the fuel cell 10 during the electric power generation is absorbed and removed by the dry oxidizing gas while the fuel cell system 100 stops operating.

### Embodiment 2

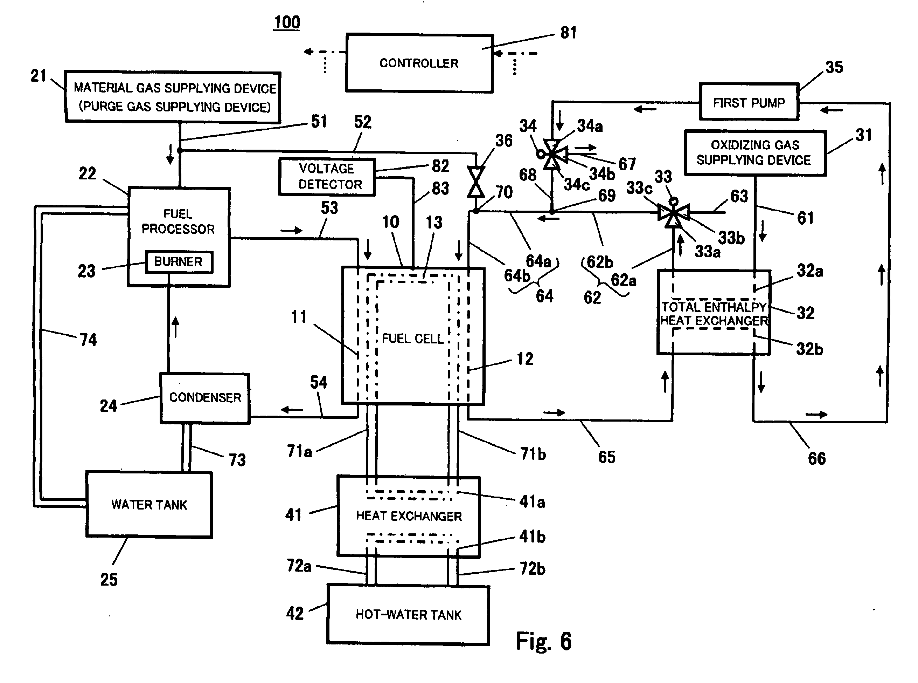

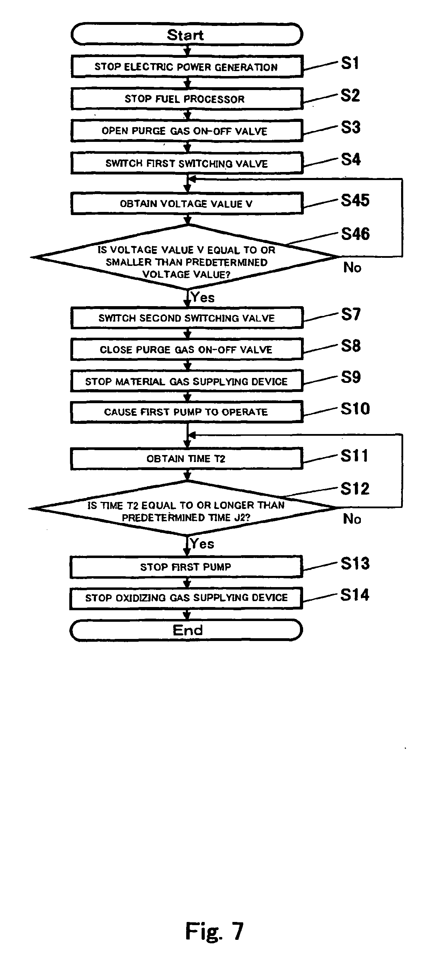

Fig. 6 is a schematic diagram showing a schematic configuration of the fuel cell system according to Embodiment 2 of the present invention and schematically shows the flow of the reactant gas during the electric power generation of the fuel cell. Fig. 7 is a flow chart schematically showing steps of the stop operation program stored in the storage portion of the controller in the fuel cell system according to Embodiment 2.

As shown in Fig. 6, the fuel cell system 100 according to Embodiment 2 is the same in basic configuration as the fuel cell system 100 according to Embodiment 1 but is different from the fuel cell system 100 according to Embodiment 1 in that a voltage detector 82 is provided. Specifically, the voltage detector 82 is connected between a pair of electric output terminals (not shown) of the fuel cell 10. Then, the voltage detector 82 transfers a detected voltage value to the controller 81. A known voltage detector can be used as the voltage detector 82.

Moreover, as shown in Fig. 7, in the stop operation program of the fuel cell system 100 according to Embodiment 2, Steps S5 and S6 in the stop operation program of the fuel cell system 100 according to Embodiment 1 shown in Fig. 3 are replaced with Steps S45 and S46. Specifically, in Step S45, the calculation processing portion of the controller 81 obtains a voltage value V of the fuel cell 10 from the voltage detector 82. Next, the calculation processing portion determines whether or not the voltage value V obtained in Step S45 is equal to or smaller than a predetermined voltage value stored in the storage portion (Step S46). In a case where the voltage value V is larger than the predetermined voltage value, the process returns to Step S45, and Steps S45 and S46 are repeatedly carried out until the voltage value V becomes equal to or smaller than the predetermined voltage value. In a case where the voltage value V is equal to or smaller than the predetermined voltage value, the process proceeds to Step S7.

The predetermined voltage value is the voltage value of the fuel cell 10 when the oxidizing gas existing in the purge gas circulating passage is adequately replaced with the purge gas. The predetermined voltage value is obtained in advance by experiments. This utilizes the fact that the potential of the cathode 2b decreases in a case where the oxidizing gas existing in the oxidizing gas internal channel 12 in the fuel cell 10 and the purge gas circulating passage is replaced with an inactive gas, such as the material gas.

Embodiment 2 explained as above can obtain the same effects as Embodiment 1.

### Embodiment 3

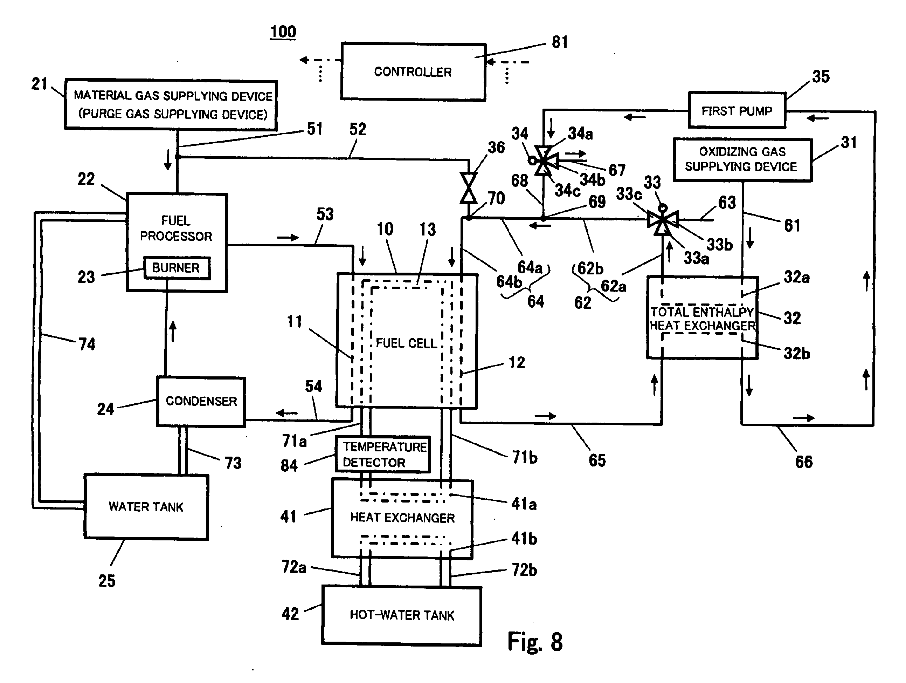

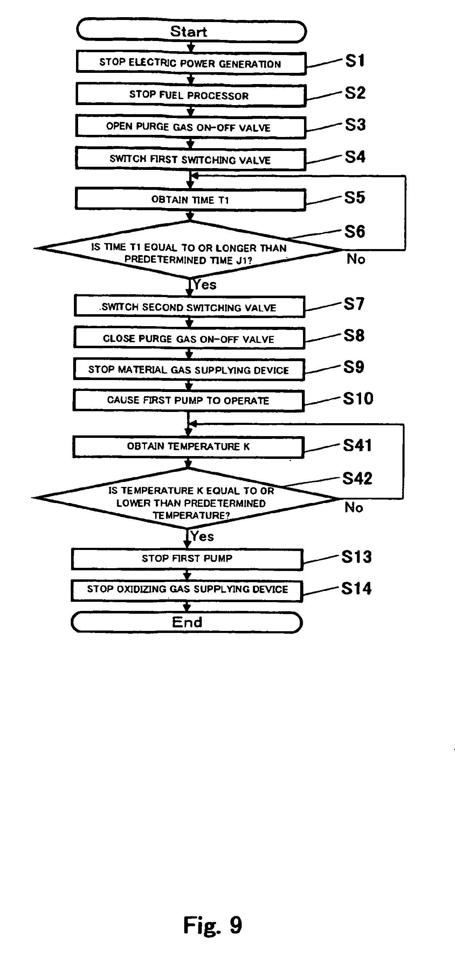

Fig. 8 is a schematic diagram showing a schematic configuration of the fuel cell system according to Embodiment 3 of the present invention and schematically shows the flow of the reactant gas during the electric power generation of the fuel cell. Fig. 9 is a flow chart schematically showing steps of the stop operation program stored in the storage portion of the controller in the fuel cell system according to Embodiment 3.

As shown in Fig. 8, the fuel cell system 100 according to Embodiment 3 is the same in basic configuration as the fuel cell system 100 according to Embodiment 1 but is different from the fuel cell system 100 according to Embodiment 1 in that a temperature detector 84 is provided. Specifically, the temperature detector 84 is disposed on a portion of the first heat medium outward route 71a so as to be able to detect the temperature of the fuel cell 10 and is configured to detect the temperature of the first heat medium discharged from the fuel cell 10 as the temperature of the fuel cell 10. Then, the temperature detector 84 transfers the detected temperature to the controller 81. A known temperature detector can be used as the temperature detector 84. Herein, a thermistor is used, but for example, a thermocouple may be used.

Moreover, as shown in Fig. 9, in the stop operation program of the fuel cell system 100 according to Embodiment 3, Steps S11 and S12 in the stop operation program if the fuel cell system 100 according to Embodiment 1 shown in Fig. 3 are replaced with Steps S41 and S42. Specifically, in Step S41, the calculation processing portion of the controller 81 obtains a temperature K of the fuel cell 10 from the temperature detector 84. Next, the calculation processing portion determines whether or not the temperature K obtained in Step S41 is equal to or higher than a predetermined temperature stored in the storage portion (Step S42). In a case where the temperature K is higher than the predetermined temperature, the process returns to Step S41, and Steps S41 and S42 are repeatedly carried out until the temperature K becomes equal to or lower than the predetermined temperature. In a case where the temperature K is equal to or lower than the predetermined temperature, the process proceeds to Step S13.

The predetermined temperature of the fuel cell 10 is a temperature when the moisture existing in the purge gas circulating passage and the fuel cell 10 is adequately removed such that the CO poisoning resistance of the anode 2a recovers, the gas diffusivity of the gas diffusion layer recovers, and the polymer electrolyte membrane 1 is prevented from being excessively dried. The predetermined temperature is obtained in advance by experiments. This utilizes the fact that the temperature in the fuel cell 10 is maintained constant (80 degrees for example) during the electric power generation of the fuel cell 10, but the temperature in the fuel cell 10 decreases with time by stopping the electric power generation.

Embodiment 3 explained as above can obtain the same effects as Embodiment 1.

### Embodiment 4

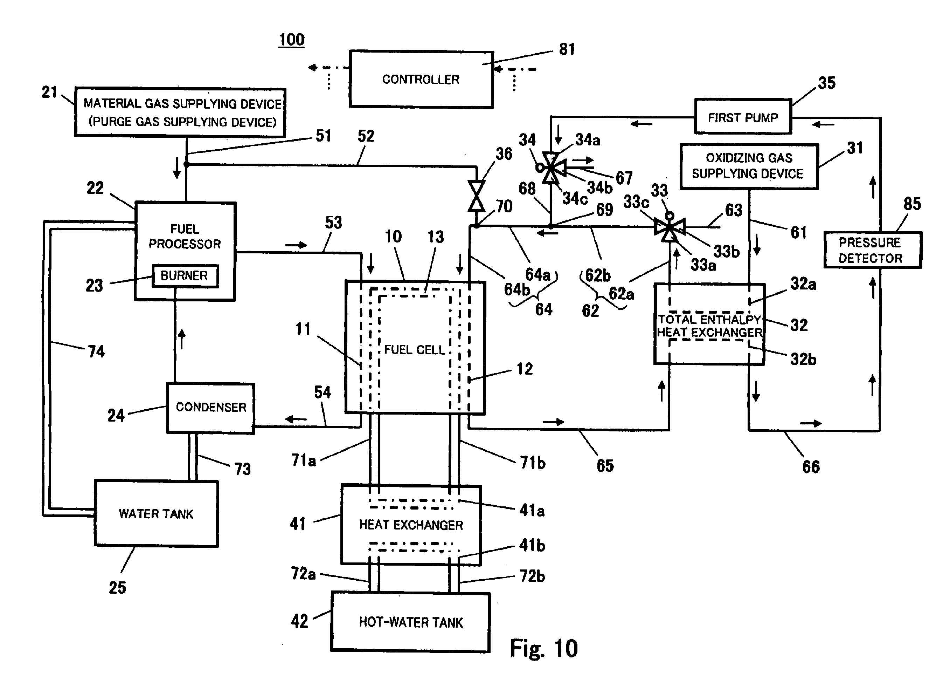

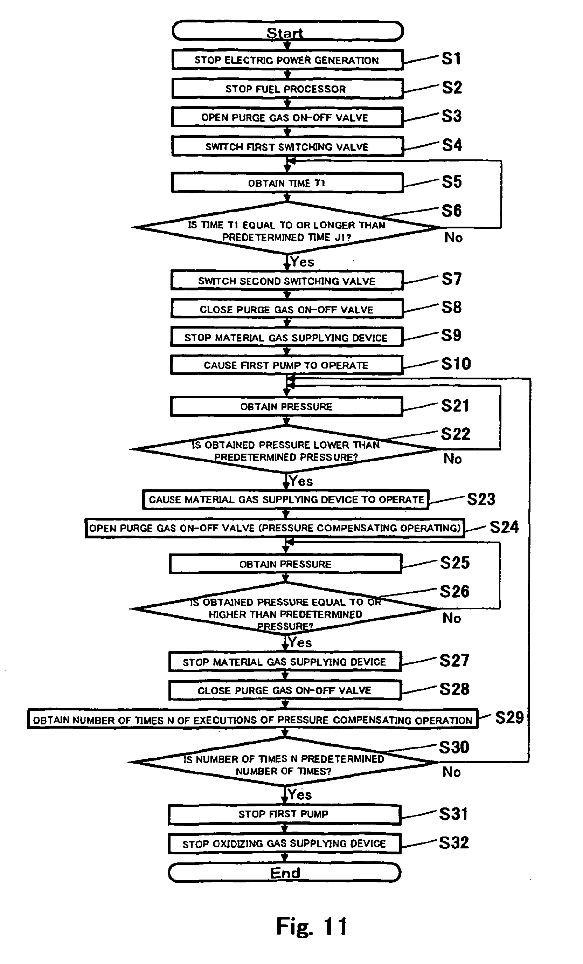

Fig. 10 is a schematic diagram showing a schematic configuration of the fuel cell system according to Embodiment 4 of the present invention and schematically shows the flow of the reactant gas during the electric power generation of the fuel cell. Fig.11 is a flow chart schematically showing steps of the stop operation program stored in the storage portion of the controller in the fuel cell system according to Embodiment 4.

As shown in Fig. 10, the fuel cell system 100 according to Embodiment 4 is the same in basic configuration as the fuel cell system 100 according to Embodiment 1 but is different from the fuel cell system 100 according to Embodiment 1 in that a pressure detector 85 is provided. Specifically, the pressure detector 85 is disposed on a portion of the oxidizing gas discharging passage midstream portion 66 and is configured to detect the pressure of the purge gas flowing through the oxidizing gas discharging passage midstream portion 66. Then, the pressure detector 85 transfers the detected pressure to the controller 81. A known pressure detector can be used as the pressure detector 85. Herein, the pressure detector 85 is disposed on the oxidizing gas discharging passage midstream portion 66. However, the present embodiment is not limited to this, and the pressure detector 85 may be disposed on any gas passages constituting the purge gas circulating passage.

Moreover, as shown in Fig. 11, Steps S1 to S10 of the stop operation program of the fuel cell system 100 according to Embodiment 4 are the same as those of the stop operation program of the fuel cell system 100 according to Embodiment 1 shown in Fig. 3, but Step S11 and subsequent steps of the stop operation program of the fuel cell system 100 according to Embodiment 4 are different from those of the stop operation program of the fuel cell system 100 according to Embodiment 1 shown in Fig. 3. Hereinafter, the operations in Step S10 and subsequent steps will be explained.

The calculation processing portion of the controller 81 outputs an operation command to the first pump 35 (Step S10) to cause the first pump 35 to start operating. With this, the purge gas (containing a small amount of oxidizing gas) circulates in the purge gas circulating passage. Then, the calculation processing portion obtains the pressure in the purge gas circulating passage (herein, the oxidizing gas discharging passage midstream portion 66) from the pressure detector 85 (Step S21). Then, the calculation processing portion determines whether or not the obtained pressure is lower than a predetermined pressure stored in the storage portion (Step S22). In a case where the obtained pressure is equal to or higher than the predetermined pressure, the process returns to Step S21, and Steps S21 and S22 are repeatedly carried out until the pressure in the purge gas circulating passage becomes lower than the predetermined pressure. In a case where the pressure in the purge gas circulating passage is lower than the predetermined pressure, the process proceeds to Step S23. Here, the predetermined pressure is a negative pressure in the purge gas circulating passage. The reasons why the inside of the purge gas circulating passage becomes the negative pressure are the moisture decrease and the volume decrease of the purge gas (containing the oxidizing gas and steam) due to the temperature decrease in the purge gas circulating passage and the fuel cell 10.

In Step S23, the calculation processing portion outputs an operation command to the material gas supplying device 21 and then outputs a valve open command to the purge gas on-off valve 36 (Step S24). With this, the material gas (purge gas) is supplied from the material gas supplying device 21 to the purge gas circulating passage, so that the pressure in the purge gas circulating passage increases. The operations in Steps S23 and S24 are referred to as a pressure compensating operation. The calculation processing portion causes the storage portion to store the execution of the pressure compensating operation. The order of Steps S23 and S24 may be reversed.

Then, the calculation processing portion again obtains the pressure in the purge gas circulating passage (herein, the oxidizing gas discharging passage midstream portion 66) from the pressure detector 85 (Step S25). Then, the calculation processing portion determines whether or not the obtained pressure is equal to or higher than a predetermined pressure stored in the storage portion (Step S26). In a case where the obtained pressure is lower than the predetermined pressure, the process returns to Step S25, and Steps S25 and S26 are repeatedly carried out until the pressure in the purge gas circulating passage becomes equal to or higher than the predetermined pressure. In a case where the pressure is equal to or higher than the predetermined pressure, the process proceeds to Step S27.

In Step S27, the calculation processing portion outputs the stop command to the material gas supplying device 21 and then outputs a valve close command to the purge gas on-off valve 36 (Step S28). With this, the supply of the purge gas from the material gas supplying device 21 stops to prevent the pressure in the purge gas circulating passage from increasing beyond necessity. The order of Steps S27 and S28 may be reversed.

Next, the calculation processing portion of the controller 81 obtains, from the storage portion, the number of times N of executions of the pressure compensating operation carried out after the stop operation program has started (Step S29). Then, the calculation processing portion of the controller 81 determines whether or not the number of times N is a predetermined number of times stored in the storage portion (Step S30). In a case where the obtained number of times N is smaller than the predetermined number of times, the process returns to Step S21, and Steps S21 to S30 are repeatedly carried out until the number of times N reaches the predetermined number of times. In a case where the number of times N is the predetermined number of times, the process proceeds to Step S31.

In Step S31, the calculation processing portion outputs the operation stop command to the first pump 35. With this, the first pump 35 stops operating, and this stops the circulation of the purge gas in the purge gas circulating passage. Next, the calculation processing portion outputs the operation stop command to the oxidizing gas supplying device 31 (Step S32) to terminate the present program. With this, the operation of the oxidizing gas supplying device 31 stops, and the fuel cell system 100 stops. The order of Steps S31 and S32 may be reversed.

As above, the fuel cell system 100 according to Embodiment 4 can obtain the same effects as the fuel cell system 100 according to Embodiment 1. Moreover, by carrying out the pressure compensating operation, the operation of the fuel cell system 100 can be carried out more safely. Further, by measuring a time for a moisture removing operation based on the number of times of executions of the pressure compensating operation, the moisture removing operation can be accurately carried out. Thus, the energy saving effect and the prevention of excessive dryness of the polymer electrolyte membrane 1 can be realized.

### Embodiment 5

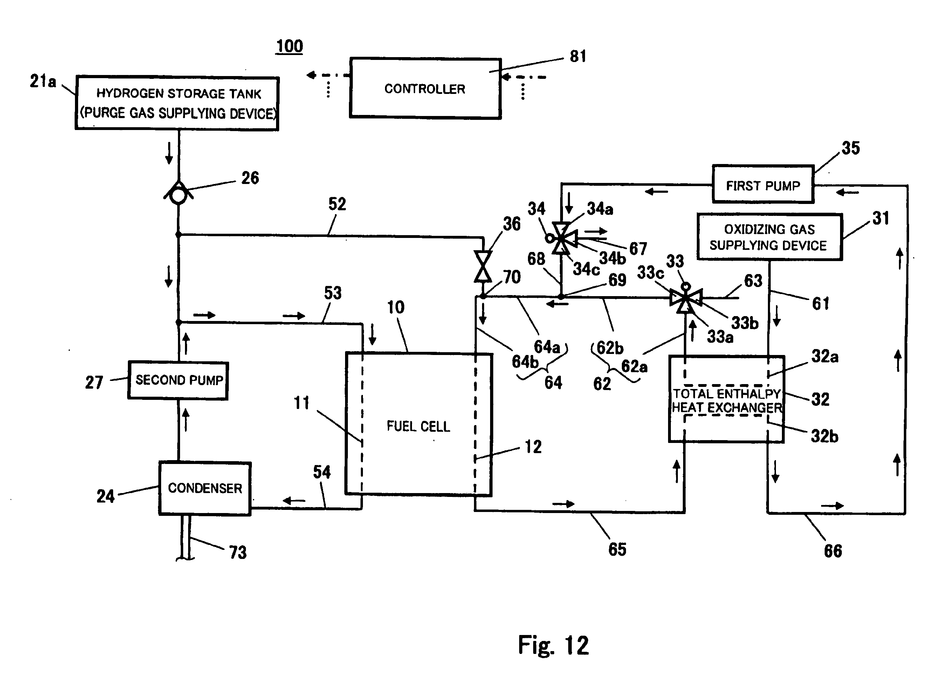

Fig. 12 is a schematic diagram showing a schematic configuration of the fuel cell system according to Embodiment 5 of the present invention and schematically shows the flow of the reactant gas during the electric power generation of the fuel cell.

As shown in Fig. 12, the fuel cell system 100 according to Embodiment 5 is the same in basic configuration as the fuel cell system 100 according to Embodiment 1 but is different from the fuel cell system 100 according to Embodiment 1 in that: the fuel gas supplying system is configured differently; and the purge gas supplying device and the fuel gas supplying device are configured as a single device (hydrogen storage tank 21a).

The fuel gas supplying system of the fuel cell system 100 according to Embodiment 5 includes the hydrogen storage tank 21a, the condenser 24, a check valve 26, and a second pump 27 and is configured such that the fuel gas (hydrogen gas) is supplied from the hydrogen storage tank 21a to the fuel gas internal channel 11 of the fuel cell 10.

Specifically, an exit of the hydrogen storage tank 21a and an entrance of the fuel gas internal channel 11 (to be precise, the fuel gas supplying manifold) are connected to each other by the fuel gas supplying passage 53. The check valve 26 is disposed on a portion of the fuel gas supplying passage 53 and is configured to prevent the fuel gas from flowing to the hydrogen storage tank 21a. Moreover, the upstream end of the purge gas supplying passage 52 is connected to a portion of the fuel gas supplying passage 53 which portion is located downstream of the check valve 26.

Then, the downstream end of the fuel gas discharging passage 54 is connected to the portion of the fuel gas supplying passage 53 which portion is located downstream of the check valve 26, and the second pump 27 is disposed on a portion of the fuel gas discharging passage 54. With this, the off gas whose moisture has been removed in the condenser 24 is supplied through the fuel gas supplying passage 53 to the fuel cell 10 by the second pump 27. Moreover, the fuel gas having been consumed in the fuel cell 10 is replenished from the hydrogen storage tank 21a.

The operations of the fuel cell system according to Embodiment 5 configured as above are the same as those of the fuel cell system 100 according to Embodiment 1 except that: the fuel gas is supplied from the hydrogen storage tank 21a to the fuel cell 10; and the hydrogen gas is used as the purge gas. Therefore, detailed explanations of the operations of the fuel cell system according to Embodiment 5 are omitted.

Embodiment 5 explained as above can obtain the same effects as Embodiment 1.

### Embodiment 6

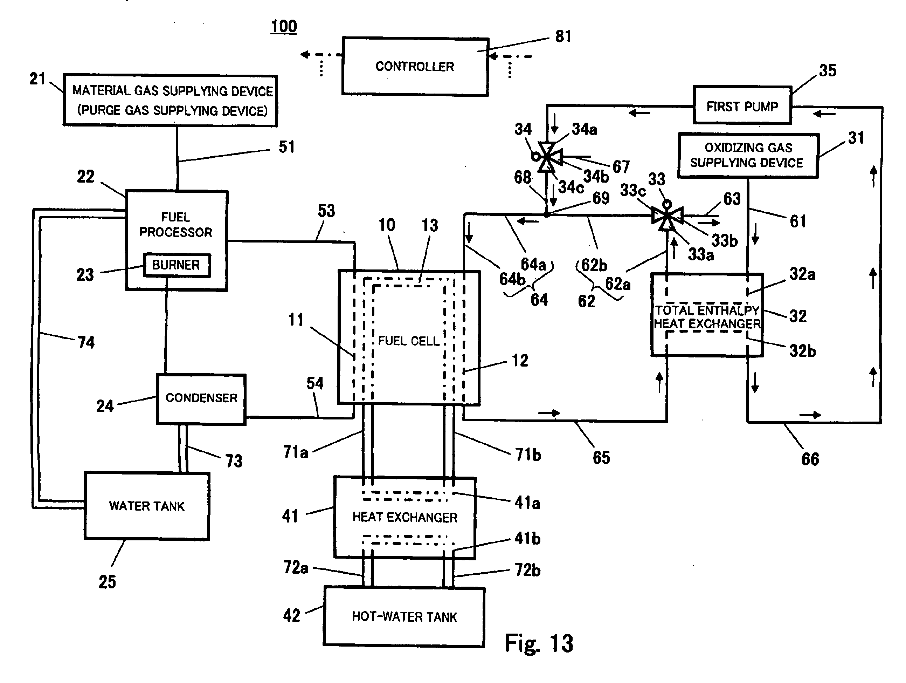

Fig. 13 is a schematic diagram showing a schematic configuration of the fuel cell system according to Embodiment 6 of the present invention and is a diagram schematically showing the flow of the oxidizing gas in the stop operation of the fuel cell system.

As shown in Fig. 13, the fuel cell system 100 according to Embodiment 6 of the present invention is the same in basic configuration as the fuel cell system 100 according to Embodiment 1 but is different from the fuel cell system 100 according to Embodiment 1 in that the purge gas is not supplied to the oxidizing gas internal channel 12. Specifically, the purge gas on-off valve 36 and the purge gas supplying passage 52 are not provided, so that the material gas as the purge gas is not supplied from the material gas supplying device 21 to the oxidizing gas internal channel 12.

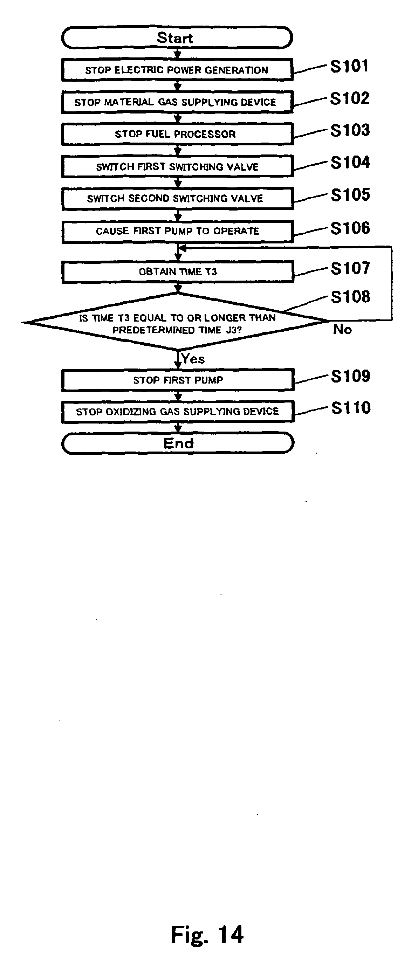

Next, the stop operation of the fuel cell system 100 according to Embodiment 6 will be explained in reference to Fig. 14.

Fig. 14 is a flow chart schematically showing steps of the stop operation program stored in the storage portion of the controller in the fuel cell system 100 according to Embodiment 6.

First, the calculation processing portion of the controller 81 stops the electric power generation and starts the stop operation (Step S101). Next, the calculation processing portion of the controller 81 outputs the stop command to the material gas supplying device 21 (Step S102) and outputs the stop command to the fuel processor 22 (Step S103). With this, the supply of the material gas from the material gas supplying device 21 to the fuel processor 22 stops, and the fuel processor 22 stops supplying the fuel gas to the anode 2a of the fuel cell 10. The order of Steps S102 and S103 may be reversed.

Next, the calculation processing portion of the controller 81 causes the first switching valve 33 to stop the flow of the oxidizing gas flowing from the second oxidizing gas supplying passage upstream portion 62a to the second oxidizing gas supplying passage downstream portion 62b and to allow the oxidizing gas to flow from the second oxidizing gas supplying passage upstream portion 62a to the gas discharging passage 63 (Step S104). Specifically, the first switching valve 33 causes the first port 33a to be communicated with the second port 33b and closes the third port 33c. Next, the calculation processing portion causes the second switching valve 34 to stop the flow of the oxidizing gas flowing from the oxidizing gas discharging passage midstream portion 66 to the oxidizing gas discharging passage downstream portion 67 and to allow the oxidizing gas to flow from the oxidizing gas discharging passage midstream portion 66 to the connecting passage 68 (Step S105). Specifically, the second switching valve 34 causes the first port 34a to be communicated with the third port 34c and closes the second port 34b. Next, the calculation processing portion outputs the operation command to the first pump 35 (Step S106) to cause the first pump 35 to start operating. The order of Steps S104 to S106 can be set arbitrarily.

With this, the gas circulating passage is formed, which is constituted by the connecting passage 68, the third oxidizing gas supplying passage upstream portion 64a, the third oxidizing gas supplying passage downstream portion 64b, the oxidizing gas internal channel 12, the oxidizing gas discharging passage upstream portion 65, the secondary passage 32b, and the oxidizing gas discharging passage midstream portion 66. Then, the oxidizing gas existing in the gas circulating passage flows through the gas circulating passage, and the oxidizing gas supplied from the oxidizing gas supplying device 31 flows through the first oxidizing gas supplying passage 61, the primary passage 32a, the second oxidizing gas supplying passage upstream portion 62a, and the gas discharging passage 63 in this order to be discharged to the outside of the fuel cell system 100.

At this time, the hydrogen in the fuel gas existing in the fuel gas internal channel 11 and the oxygen in the oxidizing gas (air) existing in the oxidizing gas internal channel 12 leak each other through the polymer electrolyte membrane 1. The leaked reactant gases react with each other by the catalyst in the anode 2a and the catalyst in the cathode 2b to generate water. Therefore, the oxygen in the oxidizing gas is consumed, and nitrogen that is the inactive gas occupies a large part of the oxidizing gas. Therefore, the potential of the cathode 2b decreases.

Moreover, in the total enthalpy heat exchanger 32, the moisture moves from the moisture-containing oxidizing gas (gas in the gas circulating passage) existing in the gas circulating passage to the dry oxidizing gas supplied from the oxidizing gas supplying device 31 (moisture exchange occurs therebetween). Thus, the moisture-containing oxidizing gas is dehumidified.

The dehumidified oxidizing gas is supplied to the oxidizing gas internal channel 12 of the fuel cell 10. While the dehumidified oxidizing gas flows through the oxidizing gas internal channel 12, the moisture retained by the cathode 2b of the fuel cell 10 is removed (taken away). Then, the oxidizing gas retaining the moisture retained by the cathode 2b is dehumidified while flowing through the secondary passage 32b of the total enthalpy heat exchanger 32. Thus, the moisture retained by the cathode 2b of the fuel cell 10 is removed. Moreover, since the moisture retained by the anode 2a moves through the polymer electrolyte membrane 1 to the cathode 2b by the moisture concentration difference between the cathode 2b and the anode 2a, the moisture retained by the anode 2a is also removed.

Next, the calculation processing portion of the controller 81 obtains time information T3 from the clock portion (Step S107). Then, the calculation processing portion of the controller 81 determines whether or not a time elapsed since the operation start of the first pump 35 is equal to or longer than a predetermined time J3 stored in the storage portion (Step S108). In a case where the elapsed time is shorter than the predetermined time J3, the process returns to Step S107, and Steps S107 and S108 are repeatedly carried out until the elapsed time becomes equal to or longer than the predetermined time J3. In a case where the elapsed time is equal to or longer than the predetermined time J3, the process proceeds to Step S109. The predetermined time J3 is a time it takes to adequately remove the moisture in gas circulating passage and the fuel cell 10 such that the CO poisoning resistance of the anode 2a recovers, the gas diffusivity of the gas diffusion layer recovers, and the polymer electrolyte membrane 1 is prevented from being excessively dried. The predetermined time J3 is obtained in advance by experiments.

In Step S109, the calculation processing portion of the controller 81 outputs the operation stop command to the first pump 35. With this, the first pump 35 stops operating, and this stops the circulation of the oxidizing gas in the gas circulating passage. Next, the calculation processing portion outputs the operation stop command to the oxidizing gas supplying device 31 (Step S110) to terminate the present program. With this, the oxidizing gas supplying device 31 stops operating, and the fuel cell system 100 stops. The order of Steps S109 and S110 may be reversed.

Embodiment 6 explained as above can obtain the same effects as Embodiment 1. In the present embodiment, the calculation processing portion obtains the time information T3 from the clock portion in Step S107. Then, the calculation processing portion determines whether or not the moisture existing in the gas circulating passage and the fuel cell 10 is adequately removed such that the CO poisoning resistance of the anode 2a recovers, the gas diffusivity of the gas diffusion layer recovers, and the polymer electrolyte membrane 1 is prevented from being excessively dried. However, the present embodiment is not limited to this. For example, as with the fuel cell system 100 according to Embodiment 3, the temperature detector 84 may be provided, and the above determination may be made based on the temperature obtained by the temperature detector 84.

### Embodiment 7

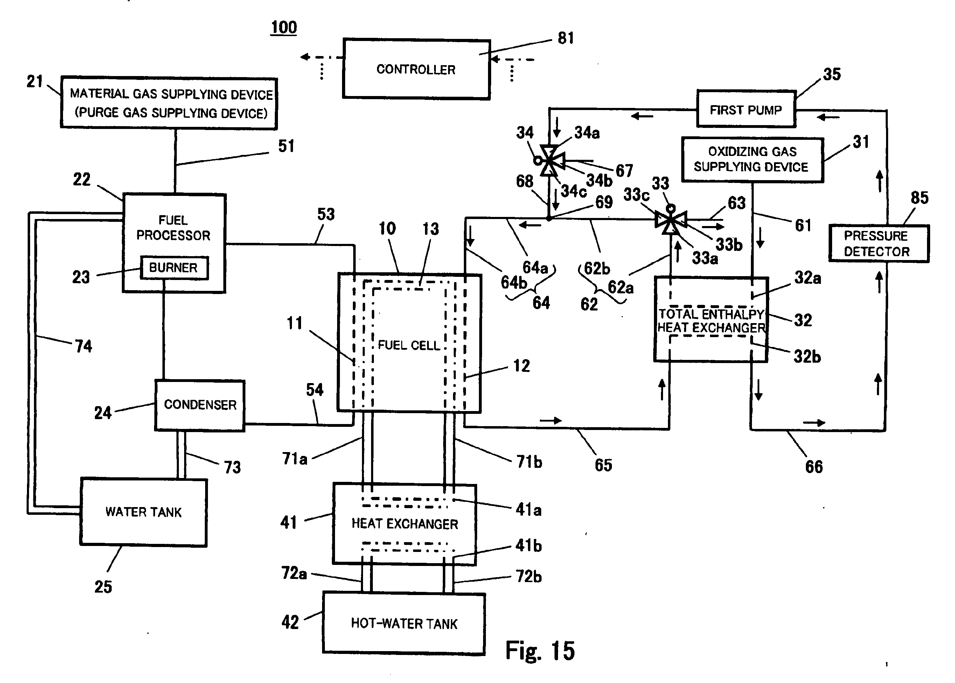

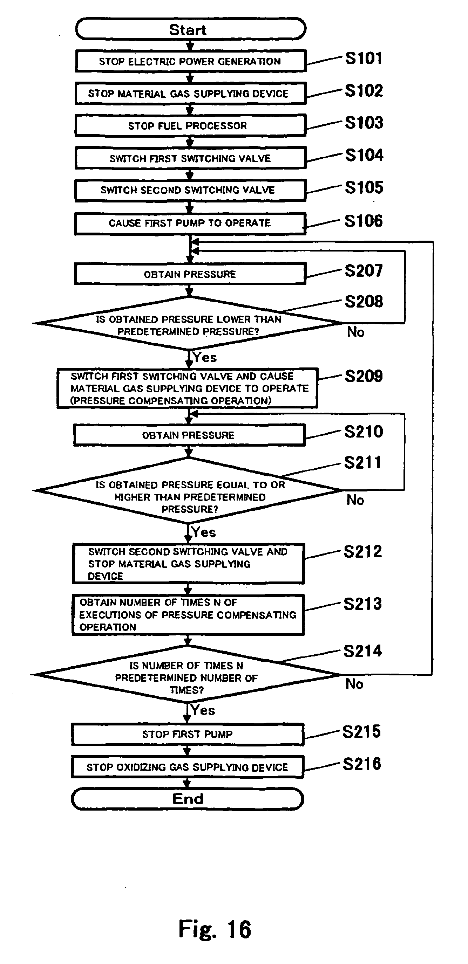

Fig. 15 is a schematic diagram showing a schematic configuration of the fuel cell system according to Embodiment 7 of the present invention and is a diagram schematically showing the flow of the oxidizing gas in the stop operation of the fuel cell system. Fig. 16 is a flow chart schematically showing steps of the stop operation program stored in the storage portion of the controller in the fuel cell system 100 according to Embodiment 7.

As shown in Fig. 15, the fuel cell system 100 according to Embodiment 7 of the present invention is the same in basic configuration as the fuel cell system 100 according to Embodiment 6 but is different from the fuel cell system 100 according to Embodiment 6 in that the pressure detector 85 is provided. Specifically, the pressure detector 85 is disposed on a portion of the oxidizing gas discharging passage midstream portion 66 and is configured to detect the pressure of the oxidizing gas flowing through the oxidizing gas discharging passage midstream portion 66. Then, the pressure detector 85 transfers the detected pressure to the controller 81. A known pressure detector can be used as the pressure detector 85. Herein, the pressure detector 85 is disposed on the oxidizing gas discharging passage midstream portion 66. However, the present embodiment is not limited to this, and the pressure detector 85 may be disposed on any gas passages constituting the gas circulating passage.

Moreover, as shown in Fig. 16, Steps S101 to S106 in the stop operation program of the fuel cell system 100 according to Embodiment 7 are the same as those in the stop operation program of the fuel cell system 100 according to Embodiment 6 shown in Fig. 14, but Step S207 and subsequent steps in the stop operation program of the fuel cell system 100 according to Embodiment 7 are different from those in the stop operation program of the fuel cell system 100 according to Embodiment 6. Hereinafter, the operations in Step S106 and subsequent steps will be explained.

The calculation processing portion of the controller 81 outputs the operation command to the first pump 35 (Step S106) to cause the first pump 35 to start operating. With this, the moisture-containing oxidizing gas circulates in the gas circulating passage.

Next, the calculation processing portion of the controller 81 obtains the pressure in the gas circulating passage (herein, the oxidizing gas discharging passage midstream portion 66) from the pressure detector 85 (Step S207). Then, the calculation processing portion of the controller 81 determines whether or not the obtained pressure is lower than a predetermined pressure stored in the storage portion (Step S208). In a case where the obtained pressure is equal to or higher than the predetermined pressure, the process returns to Step S207, and Steps S207 and S208 are repeatedly carried out until the pressure becomes lower than the predetermined pressure. In a case where the pressure is lower than the predetermined pressure, the process proceeds to Step S209. Here, the predetermined pressure is a negative pressure in the gas circulating passage. The reasons why the inside of the gas circulating passage becomes the negative pressure are, for example, the moisture decrease and the volume decrease of each of the oxidizing gas and the steam due to the temperature decrease in the gas circulating passage and the fuel cell 10.

In Step S209, the calculation processing portion of the controller 81 causes the first port 33a of the first switching valve 33 to be communicated with the third port 33c thereof and closes the second port 33b thereof. Moreover, the calculation processing portion outputs the operation command to the material gas supplying device 21. With this, the oxidizing gas is supplied as a pressure compensating gas from the oxidizing gas supplying device 31 through the first oxidizing gas supplying passage 61 and the second oxidizing gas supplying passage 62 to the gas circulating passage. Thus, the pressure in the gas circulating passage increases. Moreover, the material gas (pressure compensating gas) is supplied from the material gas supplying device 21 to the fuel gas internal channel 11. Thus, the pressure in the fuel gas internal channel 11 increases. The operation in Step S209 is referred to as the pressure compensating operation. The calculation processing portion causes the storage portion to store the execution of the pressure compensating operation.

Next, the calculation processing portion of the controller 81 again obtains the pressure in gas circulating passage (herein, the oxidizing gas discharging passage midstream portion 66) from the pressure detector 85 (Step S210). Then, the calculation processing portion of the controller 81 determines whether or not the obtained pressure is equal to or higher than a predetermined pressure stored in the storage portion (Step S211). In a case where the obtained pressure is lower than the predetermined pressure, the process returns to Step S210, and Steps S210 and S211 are repeatedly carried out until the pressure becomes equal to or higher than the predetermined pressure. In a case where the pressure is equal to or higher than the predetermined pressure, the process proceeds to Step S211.

In Step S211, the calculation processing portion of the controller 81 causes the first port 33a of the first switching valve 33 to be communicated with the second port 33b thereof and closes the third port 33c thereof. Moreover, the calculation processing portion outputs the stop command to the material gas supplying device 21. With this, the supply of the oxidizing gas from the oxidizing gas supplying device 31 to the gas circulating passage stops and the supply of the material gas from the material gas supplying device 21 to the fuel gas internal channel 11 stops to prevent the pressure in the gas circulating passage and the fuel gas internal channel 11 from increasing beyond necessity.

Next, the calculation processing portion of the controller 81 obtains, from the storage portion, the number of times N of executions of the pressure compensating operation carried out after the stop operation program has started (Step S213). Then, the calculation processing portion of the controller 81 determines whether or not the number of times N is a predetermined number of times stored in the storage portion (Step S214). In a case where the number of times N obtained in Step S213 is smaller than the predetermined number of times, the process returns to Step S207, and Steps S207 to S214 are repeatedly carried out until the number of times N reaches the predetermined number of times. In a case where the number of times N is the predetermined number of times, the process proceeds to Step S215.

In Step S215, the calculation processing portion outputs the operation stop command to the first pump 35. With this, the first pump 35 stops operating, and this stops the circulation of the oxidizing gas in the gas circulating passage. Next, the calculation processing portion outputs the operation stop command to the oxidizing gas supplying device 31 (Step S216) to terminate the present program. With this, the oxidizing gas supplying device 31 stops operating, and the fuel cell system 100 stops. The order of Steps S215 and S216 may be reversed.

As above, the fuel cell system 100 according to Embodiment 7 can obtain the same effects as the fuel cell system 100 according to Embodiment 6. Moreover, by carrying out the pressure compensating operation, the operation of the fuel cell system 100 can be carried out more safely. Further, by measuring a time for the moisture removing operation based on the number of times of executions of the pressure compensating operation, the moisture removing operation can be accurately carried out. Thus, the energy saving effect and the prevention of excessive dryness of the polymer electrolyte membrane 1 can be realized.

Each of the fuel cell systems 100 according to Embodiments 1 to 4 is configured such that the material gas is supplied as the purge gas. However, these embodiments are not limited to this. Each of the fuel cell systems 100 according to Embodiments 1 to 4 may be configured such that the hydrogen gas (fuel gas) generated in the fuel processor 22 is supplied as the purge gas. Moreover, the material gas is not limited to the city gas but may be methane, LPG, or the like. Moreover, the purge gas is not limited to the material gas and the hydrogen gas but may be an inactive gas, such as nitrogen or helium. In this case, a tank for storing the inactive gas is additionally provided.

Moreover, in Embodiment 1, a flow direction of the purge gas flowing in the purge gas circulating passage by the first pump 35 is a direction from the entrance to the exit of the oxidizing gas internal channel 12 as shown in Fig. 5. However, Embodiment 1 is not limited to this. The flow direction of the purge gas may be opposite to the above direction. To be specific, the purge gas may flow from the exit to the entrance of the oxidizing gas internal channel 12.

Moreover, each of Embodiments 1 to 5 is configured such that the first and second switching valves 33 and 34 are controlled by the controller 81. However, these embodiments are not limited to this. Each of the first and second switching valves 33 and 34 may be configured to have a control function.

Moreover, in order to reduce the amount of oxidizing gas in the purge gas circulating passage, it is preferable that the second switching valve 34 be disposed on a downstream portion of the oxidizing gas discharging passage midstream portion 66. In other words, it is preferable that the connecting passage 68 be short.

Further, the discharge fuel gas discharged from the fuel gas internal channel 11 is supplied through the fuel gas discharging passage 54 to the condenser 24 and is separated from the moisture. However, the present invention is not limited to this. For example, the heat exchange and the moisture exchange may be carried out between the supply oxidizing gas flowing through the fuel gas supplying passage 53 and the discharge fuel gas flowing through the fuel gas discharging passage 54 by the total enthalpy heat exchanger.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention.

### Industrial Applicability

In accordance with the fuel cell system according to the present invention and the method for operating the fuel cell, the power generation efficiency can be stably maintained for a long period of time. Therefore, the fuel cell system can be utilized as, for example, a domestic cogeneration system and a vehicle power supply.

## Claims

1. A fuel cell system comprising:
a fuel cell including an anode containing a catalyst and having gas diffusivity, a cathode containing a catalyst and having gas diffusivity, a fuel gas internal channel formed such that a fuel gas flows while contacting the anode, and an oxidizing gas internal channel formed such that an oxidizing gas flows while contacting the cathode;
an oxidizing gas supplying passage having a downstream end communicated with an upstream end of the oxidizing gas internal channel;
an oxidizing gas supplying device connected to an upstream end of the oxidizing gas supplying passage and configured to supply the oxidizing gas through the oxidizing gas supplying passage to the oxidizing gas internal channel;
an oxidizing gas discharging passage having an upstream end communicated with a downstream end of the oxidizing gas internal channel;
a moisture exchanger disposed on both the oxidizing gas supplying passage and the oxidizing gas discharging passage and configured to exchange moisture between the oxidizing gas flowing through the oxidizing gas supplying passage and a gas flowing through the oxidizing gas discharging passage;
a gas circulating passage forming/canceling device configured to form or cancel a closed gas circulating passage by connecting or separating a portion (hereinafter referred to as a first portion) of the oxidizing gas discharging passage which portion is located downstream of the moisture exchanger with or from a first connecting point of the oxidizing gas supplying passage which point is located downstream of the moisture exchanger;
an air blower configured to circulate a gas in the gas circulating passage; and
an atmosphere communicating/closing device configured to cause a portion (hereinafter referred to as a second portion) of the oxidizing gas supplying passage, which portion extends between the first connecting point and the moisture exchanger, to be communicated with atmosphere or to be closed,
wherein the fuel cell system is configured so that in a stop operation of the fuel cell system, the moisture retained by the gas in the gas circulating passage is absorbed and removed in the moisture exchanger by the dry oxidizing gas supplied from the oxidizing gas supplying device.

2. The fuel cell system according to claim 1, wherein in a stop operation of the fuel cell system,
the gas circulating passage forming/canceling device connects the first portion of the oxidizing gas discharging passage and the first connecting point of the oxidizing gas supplying passage to form the gas circulating passage by a portion of the oxidizing gas supplying passage which portion is located downstream of the first connecting point, the oxidizing gas internal channel, and the oxidizing gas discharging passage,
the atmosphere communicating/closing device causes the second portion of the oxidizing gas supplying passage to be communicated with the atmosphere, and
the air blower circulates the gas in the gas circulating passage to exchange moisture between the oxidizing gas flowing through the oxidizing gas supplying passage and the gas flowing through the oxidizing gas discharging passage by the moisture exchanger.

3. The fuel cell system according to claim 1, further comprising:
a controller; and
a gas discharging passage through which the second portion of the oxidizing gas supplying passage is communicated with the atmosphere, wherein:
the gas circulating passage forming/canceling device is a first three-way valve which is disposed on the first portion of the oxidizing gas discharging passage and selectively connects a part of the first portion, which part is located on a side where the moisture exchanger is provided, with the first connecting point of the oxidizing gas supplying passage or with a downstream end portion of the first portion;
the atmosphere communicating/closing device is a second three-way valve which is disposed on the second portion of the oxidizing gas supplying passage and selectively connects a part of the second portion, which part is located on the side where the moisture exchanger is provided, with a part of the second portion, which part is located on a side where the first connecting point is provided, or with the gas discharging passage; and
the controller controls the oxidizing gas supplying device, the first three-way valve, and the second three-way valve.

4. The fuel cell system according to claim 3, wherein in a stop operation of the fuel cell system,
the controller causes the first three-way valve to connect the part of the first portion, which part is located on the side where the moisture exchanger is provide, with the first connecting point of the oxidizing gas supplying passage, and
after that, the controller causes the second three-way valve to connect the part of the second portion, which part is located on the side where the moisture exchanger is provided, with the gas discharging passage and causes the oxidizing gas supplying device to supply the oxidizing gas.

5. The fuel cell system according to claim 4, further comprising a temperature detector configured to detect a temperature of the fuel cell, wherein
in a case where the temperature of the fuel cell detected by the temperature detector is equal to or lower than a preset threshold, the controller causes the oxidizing gas supplying device to stop supply of the oxidizing gas and causes the air blower to stop circulation of the gas in the gas circulating passage.

6. The fuel cell system according to claim 4, further comprising a pressure detector configured to detect a pressure of the gas in the gas circulating passage, wherein
in a case where the pressure in the gas circulating passage detected by the pressure detector is a negative pressure, the controller causes the second three-way valve to connect the part of the second portion, which part is located on the side where the moisture exchanger is provided, with the part of the second portion, which part is located on the side where the first connecting point is provided, to carry out pressure compensation.

7. The fuel cell system according to claim 6, further comprising a storage portion configured to store the number of times of executions of the pressure compensation, wherein
in a case where the number of times of executions of the pressure compensation is equal to or larger than a predetermined number of times, the controller causes the oxidizing gas supplying device to stop supply of the oxidizing gas and causes the air blower to stop circulation of the gas in the gas circulating passage.

8. The fuel cell system according to claim 3, further comprising:
a purge gas supplying passage having a downstream end connected to the gas circulating passage; and
a purge gas supplying device connected to an upstream end of the purge gas supplying passage, wherein
the controller controls the purge gas supplying device.

9. The fuel cell system according to claim 8, wherein in a stop operation of the fuel cell system,
the controller causes the second three-way valve to connect the part of the second portion, which part is located on the side where the moisture exchanger is provided, with the gas discharging passage and causes the oxidizing gas supplying device to supply the oxidizing gas,
after that, the controller causes the purge gas supplying device to supply the purge gas to purge the gas in the oxidizing gas internal channel and the oxidizing gas discharging passage,
after that, the controller causes the first three-way valve to connect the part of the first portion, which part is located on the side where the moisture exchanger is provided, with the first connecting point of the oxidizing gas supplying passage,
after that, the controller causes the purge gas supplying device to stop supply of the purge gas, and
after that, the controller causes the air blower to operate to circulate the purge gas through the gas circulating passage.

10. The fuel cell system according to claim 9, further comprising a temperature detector configured to detect a temperature of the fuel cell, wherein
in a case where the temperature of the fuel cell detected by the temperature detector is equal to or lower than a preset threshold, the controller causes the oxidizing gas supplying device to stop supply of the oxidizing gas and causes the air blower to stop circulation of the purge gas.

11. The fuel cell system according to claim 9, further comprising a pressure detector configured to detect a pressure of the gas in the purge gas circulating passage, wherein
in a case where the pressure in the gas circulating passage detected by the pressure detector is a negative pressure, the controller causes the purge gas supplying device to supply the purge gas to carry out a pressure compensation.

12. The fuel cell system according to claim 11, further comprising a storage portion configured to store the number of times of executions of the pressure compensation, wherein
in a case where the number of times of executions of the pressure compensation is equal to or larger than a predetermined number of times, the controller causes the oxidizing gas supplying device to stop supply of the oxidizing gas and causes the air blower to stop circulation of the purge gas.

13. The fuel cell system according to claim 8, further comprising:
a material supplying device configured to supply a material gas;
a fuel processor configured to reform the material gas to generate the fuel gas; and
a material gas supplying passage connecting the material supplying device and the fuel processor, wherein
the purge gas supplying device is the material supplying device.

14. The fuel cell system according to claim 8, wherein the purge gas is a hydrogen gas.

15. The fuel cell system according to claim 1, wherein the moisture exchanger is a total enthalpy heat exchanger.

16. A method for operating a fuel cell system,
the fuel cell system comprising:
a fuel cell including an anode containing a catalyst and having gas diffusivity, a cathode containing a catalyst and having gas diffusivity, a fuel gas internal channel formed such that a fuel gas flows while contacting the anode, and an oxidizing gas internal channel formed such that an oxidizing gas flows while contacting the cathode;
an oxidizing gas supplying passage having a downstream end communicated with an upstream end of the oxidizing gas internal channel;
an oxidizing gas supplying device connected to an upstream end of the oxidizing gas supplying passage and configured to supply the oxidizing gas through the oxidizing gas supplying passage to the oxidizing gas internal channel;
an oxidizing gas discharging passage having an upstream end communicated with a downstream end of the oxidizing gas internal channel;
a moisture exchanger disposed on both the oxidizing gas supplying passage and the oxidizing gas discharging passage and configured to exchange moisture between the oxidizing gas flowing through the oxidizing gas supplying passage and a gas flowing through the oxidizing gas discharging passage;
a gas circulating passage forming/canceling device configured to form or cancel a closed gas circulating passage by connecting or separating a portion (hereinafter referred to as a first portion) of the oxidizing gas discharging passage which portion is located downstream of the moisture exchanger with or from a first connecting point of the oxidizing gas supplying passage which point is located downstream of the moisture exchanger;
an air blower configured to circulate a gas in the gas circulating passage;
an atmosphere communicating/closing device configured to cause a portion (hereinafter referred to as a second portion) of the oxidizing gas supplying passage, which portion extends between the first connecting point and the moisture exchanger, to be communicated with atmosphere or to be closed; and
a gas discharging passage through which the second portion of the oxidizing gas supplying passage is communicated with the atmosphere,
the method comprising the steps of: in a stop operation of the fuel cell system,
causing the gas circulating passage forming/canceling device to connect a part of the first portion, which part is located on a side where the moisture exchanger is provided, with the first connecting point of the oxidizing gas supplying passage;
causing the atmosphere communicating/closing device to connect a part of the second portion, which part is located on a side where the moisture exchanger is provided, with the gas discharging passage; and
causing the oxidizing gas supplying device to supply the oxidizing gas.

17. A method for operating a fuel cell system,
the fuel cell system comprising:
a fuel cell including an anode containing a catalyst and having gas diffusivity, a cathode containing a catalyst and having gas diffusivity, a fuel gas internal channel formed such that a fuel gas flows while contacting the anode, and an oxidizing gas internal channel formed such that an oxidizing gas flows while contacting the cathode;
an oxidizing gas supplying passage having a downstream end communicated with an upstream end of the oxidizing gas internal channel;
an oxidizing gas supplying device connected to an upstream end of the oxidizing gas supplying passage and configured to supply the oxidizing gas through the oxidizing gas supplying passage to the oxidizing gas internal channel;
an oxidizing gas discharging passage having an upstream end communicated with a downstream end of the oxidizing gas internal channel;
a moisture exchanger disposed on both the oxidizing gas supplying passage and the oxidizing gas discharging passage and configured to exchange moisture between the oxidizing gas flowing through the oxidizing gas supplying passage and a gas flowing through the oxidizing gas discharging passage;
a gas circulating passage forming/canceling device configured to form or cancel a closed gas circulating passage by connecting or separating a portion (hereinafter referred to as a first portion) of the oxidizing gas discharging passage which portion is located downstream of the moisture exchanger with or from a first connecting point of the oxidizing gas supplying passage which point is located downstream of the moisture exchanger;
a gas discharging passage through which the second portion of the oxidizing gas supplying passage is communicated with atmosphere;
a purge gas supplying passage having a downstream end connected to the gas circulating passage;
a purge gas supplying device connected to an upstream end of the purge gas supplying passage;
an air blower configured to circulate the purge gas through the gas circulating passage; and
an atmosphere communicating/closing device configured to cause a portion (hereinafter referred to as a second portion) of the oxidizing gas supplying passage, which portion extends between the first connecting point and the moisture exchanger, to be communicated with the atmosphere or to be closed,
the method comprising the steps of: in a stop operation of the fuel cell system,
causing the atmosphere communicating/closing device to connect a part of the second portion, which part is located on a side where the moisture exchanger is provided, with the gas discharging passage;
causing the oxidizing gas supplying device to supply the oxidizing gas;
causing the purge gas supplying device to supply the purge gas to purge the gas in the oxidizing gas internal channel and the oxidizing gas discharging passage;
causing the gas circulating passage forming/canceling device to connect a part of the first portion, which part is located on a side where the moisture exchanger is provided, with the first connecting point of the oxidizing gas supplying passage;
causing the purge gas supplying device to stop supply of the purge gas; and
causing the air blower to operate to circulate the purge gas through the gas circulating passage.

## Patentansprüche

1. Brennstoffzellensystem, umfassend:
eine Brennstoffzelle mit einer Anode, die einen Katalysator enthält und Gasdiffusionsvermögen besitzt, einer Kathode, die einen Katalysator enthält und Gasdiffusionsvermögen besitzt, einem internen Brenngaskanal, der so ausgebildet ist, dass ein Brenngas strömt, während es in Kontakt mit der Anode ist, und einem internen Oxidationsgaskanal, der so ausgebildet ist, dass ein Oxidationsgas strömt, während es in Kontakt mit der Kathode ist;
eine Oxidationsgas-Zuführleitung mit einem stromab befindlichen Ende, das mit einem stromauf befindlichen Ende des internen Oxidationsgaskanals kommunikativ verbunden ist;
eine Oxidationsgas-Zuführvorrichtung, die mit einem stromauf befindlichen Ende der Oxidationsgas-Zuführleitung verbunden ist und die ausgebildet ist, um das Oxidationsgas durch die Oxidationsgas-Zuführleitung dem internen Oxidationsgaskanal zuzuführen;
eine Oxidationsgas-Abführleitung mit einem stromauf befindlichen Ende, das mit einem stromab befindlichen Ende des internen Oxidationsgaskanals kommunikativ verbunden ist;
einen Feuchtigkeitstauscher, der auf sowohl der Oxidationsgas-Zuführleitung als auch der Oxidationsgas-Abführleitung eingerichtet ist und der ausgebildet ist, um Feuchtigkeit zu tauschen zwischen dem Oxidationsgas, das durch die Oxidationsgas-Zuführleitung strömt, und einem Gas, das durch die Oxidationsgas-Abführleitung strömt;
eine Vorrichtung zur Bildung/Beseitigung einer Gaszirkulationsleitung, die ausgebildet ist, um eine geschlossene Gaszirkulationsleitung zu bilden oder zu beseitigen durch Verbinden oder Trennen eines (nachstehend als erster Abschnitt bezeichneten) Abschnitts der Oxidationsgas-Abführleitung, welcher Abschnitt sich stromab des Feuchtigkeitstauschers befindet, mit oder von einem ersten Verbindungspunkt der Oxidationsgas-Zuführleitung, welcher Punkt sich stromab des Feuchtigkeitstauschers befindet;
ein Luftgebläse, das ausgebildet ist, um ein Gas in der Gaszirkulationsleitung zirkulieren zu lassen; und
eine Atmosphärenkommunikations-/Schließvorrichtung, die ausgebildet ist, um zu veranlassen, dass ein (nachstehend als zweiter Abschnitt bezeichneter) Abschnitt der Oxidationsgas-Zuführleitung, welcher Abschnitt sich zwischen dem ersten Verbindungspunkt und dem Feuchtigkeitstauscher erstreckt, kommunikativ mit der Atmosphäre verbunden oder geschlossen wird,
wobei das Brennstoffzellensystem so ausgebildet ist, dass, in einem Anhaltevorgang des Brennstoffzellensystems, die durch das Gas in der Gaszirkulationsleitung zurückgehaltene Feuchtigkeit absorbiert und entfernt wird im Feuchtigkeitstauscher durch das trockene Oxidationsgas, das aus der Oxidationsgas-Zuführvorrichtung zugeführt wird.

2. Brennstoffzellensystem nach Anspruch 1, wobei, in einem Anhaltevorgang des Brennstoffzellensystems,
die Vorrichtung zur Bildung/Beseitigung einer Gaszirkulationsleitung den ersten Abschnitt der Oxidationsgas-Abführleitung und den ersten Verbindungspunkt der Oxidationsgas-Zuführleitung zwecks Bildung der Gaszirkulationsleitung mittels eines Abschnitts der Oxidationsgas-Zuführleitung verbindet, welcher Abschnitt sich stromab des ersten Verbindungspunkts, des internen Oxidationsgaskanals und der Oxidationsgas-Abführleitung befindet,
die Atmosphärenkommunikations-/Schließvorrichtung veranlasst, dass der zweite Abschnitt der Oxidationsgas-Zuführleitung kommunikativ mit der Atmosphäre verbunden wird, und
das Luftgebläse das Gas in der Gaszirkulationsleitung zirkulieren lässt, um Feuchtigkeit zwischen dem Oxidationsgas, das durch die Oxidationsgas-Zuführleitung strömt, und dem Gas, das durch die Oxidationsgas-Abführleitung strömt, mittels des Feuchtigkeitstauschers zu tauschen.

3. Brennstoffzellensystem nach Anspruch 1, das weiterhin umfasst:
einen Controller; und
eine Gasabführleitung, durch die der zweite Abschnitt der Oxidationsgas-Zuführleitung kommunikativ mit der Atmosphäre verbunden wird, wobei:
die Vorrichtung zur Bildung/Beseitigung einer Gaszirkulationsleitung ein erstes Drei-Wege-Ventil ist, das auf dem ersten Abschnitt der Oxidationsgas-Abführleitung eingerichtet ist und das einen Teil des ersten Abschnitts, welcher Teil sich auf einer Seite befindet, wo der Feuchtigkeitstauscher vorgesehen ist, selektiv mit dem ersten Verbindungspunkt der Oxidationsgas-Zuführleitung oder mit einem stromab befindlichen Endabschnitt des ersten Abschnitts verbindet;
die Atmosphärenkommunikations-/Schließvorrichtung ein zweites Drei-Wege-Ventil ist, das auf dem zweiten Abschnitt der Oxidationsgas-Zuführleitung eingerichtet ist und das einen Teil des zweiten Abschnitts, welcher Teil sich auf der Seite befindet, wo der Feuchtigkeitstauscher vorgesehen ist, selektiv mit einem Teil des zweiten Abschnitts, welcher Teil sich auf einer Seite befindet, wo der erste Verbindungspunkt vorgesehen ist, oder mit der Gasabführleitung verbindet; und
der Controller die Oxidationsgas-Zuführvorrichtung, das erste Drei-Wege-Ventil und das zweite Drei-Wege-Ventil steuert bzw. regelt.

4. Brennstoffzellensystem nach Anspruch 3, wobei, in einem Anhaltevorgang des Brennstoffzellensystems,
der Controller das erste Drei-Wege-Ventil veranlasst, den Teil des ersten Abschnitts, welcher Teil sich auf der Seite befindet, wo der Feuchtigkeitstauscher vorgesehen ist, mit dem ersten Verbindungspunkt der Oxidationsgas-Zuführleitung zu verbinden, und
danach der Controller das zweite Drei-Wege-Ventil veranlasst, den Teil des zweiten Abschnitts, welcher Teil sich auf der Seite befindet, wo der Feuchtigkeitstauscher vorgesehen ist, mit der Gasabführleitung zu verbinden, und die Oxidationsgas-Zuführvorrichtung veranlasst, das Oxidationsgas zuzuführen.

5. Brennstoffzellensystem nach Anspruch 4, das weiterhin einen Temperaturdetektor umfasst, der ausgebildet ist, um eine Temperatur der Brennstoffzelle zu erfassen, wobei
in einem Fall, in dem die durch den Temperaturdetektor erfasste Temperatur der Brennstoffzelle gleich einem voreingestellten Schwellwert oder niedriger ist, der Controller die Oxidationsgas-Zuführvorrichtung veranlasst, die Zufuhr des Oxidationsgases anzuhalten, und das Luftgebläse veranlasst, die Zirkulation des Gases in der Gaszirkulationsleitung anzuhalten.

6. Brennstoffzellensystem nach Anspruch 4, das weiterhin einen Druckdetektor umfasst, der ausgebildet ist, um einen Druck des Gases in der Gaszirkulationsleitung zu erfassen, wobei
in einem Fall, in dem der durch den Druckdetektor erfasste Druck in der Gaszirkulationsleitung ein negativer Druck ist, der Controller das zweite Drei-Wege-Ventil veranlasst, den Teil des zweiten Abschnitts, welcher Teil sich auf der Seite befindet, wo der Feuchtigkeitstauscher vorgesehen ist, mit dem Teil des zweiten Abschnitts, welcher Teil sich auf der Seite befindet, wo der erste Verbindungspunkt vorgesehen ist, zu verbinden, um einen Druckausgleich durchzuführen.

7. Brennstoffzellensystem nach Anspruch 6, das weiterhin einen Speicherabschnitt umfasst, der ausgebildet ist, um die Häufigkeit von Durchführungen des Druckausgleichs zu speichern, wobei
in einem Fall, in dem die Häufigkeit von Durchführungen des Druckausgleichs gleich einer vorgegebenen Häufigkeit oder größer ist, der Controller die Oxidationsgas-Zuführvorrichtung veranlasst, die Zufuhr des Oxidationsgases anzuhalten, und das Luftgebläse veranlasst, die Zirkulation des Gases in der Gaszirkulationsleitung anzuhalten.

8. Brennstoffzellensystem nach Anspruch 3, das weiterhin umfasst:
eine Spülgas-Zuführleitung mit einem stromab befindlichen Ende, das mit der Gaszirkulationsleitung verbunden ist; und
eine Spülgas-Zuführvorrichtung, die mit einem stromauf befindlichen Ende der Spülgas-Zuführleitung verbunden ist, wobei
der Controller die Spülgas-Zuführvorrichtung steuert bzw. regelt.

9. Brennstoffzellensystem nach Anspruch 8, wobei, in einem Anhaltevorgang des Brennstoffzellensystems,
der Controller das zweite Drei-Wege-Ventil veranlasst, den Teil des zweiten Abschnitts, welcher Teil sich auf der Seite befindet, wo der Feuchtigkeitstauscher vorgesehen ist, mit der Gasabführleitung zu verbinden, und die Oxidationsgas-Zuführvorrichtung veranlasst, das Oxidationsgas zuzuführen,
danach der Controller die Spülgas-Zuführvorrichtung veranlasst, das Spülgas zuzuführen, um das Gas in dem internen Oxidationsgaskanal und der Oxidationsgas-Abführleitung zu spülen,
danach der Controller das erste Drei-Wege-Ventil veranlasst, den Teil des ersten Abschnitts, welcher Teil sich auf der Seite befindet, wo der Wärmetauscher vorgesehen ist, mit dem ersten Verbindungspunkt der Oxidationsgas-Zuführleitung zu verbinden,
danach der Controller die Spülgas-Zuführvorrichtung veranlasst, die Zufuhr des Spülgases anzuhalten, und
danach der Controller das Luftgebläse veranlasst zu arbeiten, um das Spülgas durch die Gaszirkulationsleitung zirkulieren zu lassen.

10. Brennstoffzellensystem nach Anspruch 9, das weiterhin einen Temperaturdetektor umfasst, der ausgebildet ist, um eine Temperatur der Brennstoffzelle zu erfassen, wobei
in einem Fall, in dem die durch den Temperaturdetektor erfasste Temperatur der Brennstoffzelle gleich einem voreingestellten Schwellwert oder niedriger ist, der Controller die Oxidationsgas-Zuführvorrichtung veranlasst, die Zufuhr des Oxidationsgases anzuhalten, und das Luftgebläse veranlasst, die Zirkulation des Spülgases anzuhalten.

11. Brennstoffzellensystem nach Anspruch 9, das weiterhin einen Druckdetektor umfasst, der ausgebildet ist, um einen Druck des Gases in der Spülgas-Zirkulationsleitung zu erfassen, wobei
in einem Fall, in dem der durch den Druckdetektor erfasste Druck in der Gaszirkulationsleitung ein negativer Druck ist, der Controller die Spülgas-Zuführvorrichtung veranlasst, das Spülgas zuzuführen, um einen Druckausgleich durchzuführen.

12. Brennstoffzellensystem nach Anspruch 11, das weiterhin einen Speicherabschnitt umfasst, der ausgebildet ist, um die Häufigkeit von Durchführungen des Druckausgleichs zu speichern, wobei
in einem Fall, in dem die Häufigkeit von Durchführungen des Druckausgleichs gleich einer vorgegebenen Häufigkeit oder größer ist, der Controller die Oxidationsgas-Zuführvorrichtung veranlasst, die Zufuhr des Oxidationsgases anzuhalten, und das Luftgebläse veranlasst, die Zirkulation des Spülgases anzuhalten.

13. Brennstoffzellensystem nach Anspruch 8, das weiterhin umfasst:
eine Materialzuführvorrichtung, die ausgebildet ist, um ein Materialgas zuzuführen;
einen Brennstoffprozessor, der ausgebildet ist, um das Materialgas zu reformieren, um das Brenngas zu erzeugen; und
eine Materialgas-Zuführleitung, die die Materialzuführvorrichtung und den Brennstoffprozessor verbindet, wobei
die Spülgas-Zuführvorrichtung die Materialzuführvorrichtung ist.

14. Brennstoffzellensystem nach Anspruch 8, wobei das Spülgas ein Wasserstoffgas ist.

15. Brennstoffzellensystem nach Anspruch 1, wobei der Feuchtigkeitstauscher ein Gesamtenthalpie-Wärmetauscher ist.

16. Verfahren zum Betrieb eines Brennstoffzellensystems,
wobei das Brennstoffzellensystem umfasst:
eine Brennstoffzelle mit einer Anode, die einen Katalysator enthält und Gasdiffusionsvermögen besitzt, einer Kathode, die einen Katalysator enthält und Gasdiffusionsvermögen besitzt, einem internen Brenngaskanal, der so ausgebildet ist, dass ein Brenngas strömt, während es in Kontakt mit der Anode ist, und einem internen Oxidationsgaskanal, der so ausgebildet ist, dass ein Oxidationsgas strömt, während es in Kontakt mit der Kathode ist;
eine Oxidationsgas-Zuführleitung mit einem stromab befindlichen Ende, das mit einem stromauf befindlichen Ende des internen Oxidationsgaskanals kommunikativ verbunden ist;
eine Oxidationsgas-Zuführvorrichtung, die mit einem stromauf befindlichen Ende der Oxidationsgas-Zuführleitung verbunden ist und die ausgebildet ist, um das Oxidationsgas durch die Oxidationsgas-Zuführleitung dem internen Oxidationsgaskanal zuzuführen;
eine Oxidationsgas-Abführleitung mit einem stromauf befindlichen Ende, das mit einem stromab befindlichen Ende des internen Oxidationsgaskanals kommunikativ verbunden ist;
einen Feuchtigkeitstauscher, der auf sowohl der Oxidationsgas-Zuführleitung als auch der Oxidationsgas-Abführleitung eingerichtet ist und der ausgebildet ist, um Feuchtigkeit zu tauschen zwischen dem Oxidationsgas, das durch die Oxidationsgas-Zuführleitung strömt, und einem Gas, das durch die Oxidationsgas-Abführleitung strömt;
eine Vorrichtung zur Bildung/Beseitigung einer Gaszirkulationsleitung, die ausgebildet ist, um eine geschlossene Gaszirkulationsleitung zu bilden oder zu beseitigen durch Verbinden oder Trennen eines (nachstehend als erster Abschnitt bezeichneten) Abschnitts der Oxidationsgas-Abführleitung, welcher Abschnitt sich stromab des Feuchtigkeitstauschers befindet, mit oder von einem ersten Verbindungspunkt der Oxidationsgas-Zuführleitung, welcher Punkt sich stromab des Feuchtigkeitstauschers befindet;
ein Luftgebläse, das ausgebildet ist, um ein Gas in der Gaszirkulationsleitung zirkulieren zu lassen; und
eine Atmosphärenkommunikations-/Schließvorrichtung, die ausgebildet ist, um zu veranlassen, dass ein (nachstehend als zweiter Abschnitt bezeichneter) Abschnitt der Oxidationsgas-Zuführleitung, welcher Abschnitt sich zwischen dem ersten Verbindungspunkt und dem Feuchtigkeitstauscher erstreckt, kommunikativ mit der Atmosphäre verbunden oder geschlossen wird; und
eine Gasabführleitung, durch die der zweite Abschnitt der Oxidationsgas-Zuführleitung kommunikativ mit der Atmosphäre verbunden wird,
wobei das Verfahren die Schritte umfasst: in einem Anhaltevorgang des Brennstoffzellensystems,
Veranlassen der Vorrichtung zur Bildung/Beseitigung einer Gaszirkulationsleitung, einen Teil des ersten Abschnitts, welcher Teil sich auf einer Seite befindet, wo der Feuchtigkeitstauscher vorgesehen ist, mit dem ersten Verbindungspunkt der Oxidationsgas-Zuführleitung zu verbinden;
Veranlassen der Atmosphärenkommunikations-/Schließvorrichtung, einen Teil des zweiten Abschnitts, welcher Teil sich auf einer Seite befindet, wo der Feuchtigkeitstauscher vorgesehen ist, mit der Gasabführleitung zu verbinden; und
Veranlassen der Oxidationsgas-Zuführvorrichtung, das Oxidationsgas zuzuführen.

17. Verfahren zum Betrieb eines Brennstoffzellensystems,
wobei das Brennstoffzellensystem umfasst:
eine Brennstoffzelle mit einer Anode, die einen Katalysator enthält und Gasdiffusionsvermögen besitzt, einer Kathode, die einen Katalysator enthält und Gasdiffusionsvermögen besitzt, einem internen Brenngaskanal, der so ausgebildet ist, dass ein Brenngas strömt, während es in Kontakt mit der Anode ist, und einem internen Oxidationsgaskanal, der so ausgebildet ist, dass ein Oxidationsgas strömt, während es in Kontakt mit der Kathode ist;
eine Oxidationsgas-Zuführleitung mit einem stromab befindlichen Ende, das mit einem stromauf befindlichen Ende des internen Oxidationsgaskanals kommunikativ verbunden ist;
eine Oxidationsgas-Zuführvorrichtung, die mit einem stromauf befindlichen Ende der Oxidationsgas-Zuführleitung verbunden ist und die ausgebildet ist, um das Oxidationsgas durch die Oxidationsgas-Zuführleitung dem internen Oxidationsgaskanal zuzuführen;
eine Oxidationsgas-Abführleitung mit einem stromauf befindlichen Ende, das mit einem stromab befindlichen Ende des internen Oxidationsgaskanals kommunikativ verbunden ist;
einen Feuchtigkeitstauscher, der auf sowohl der Oxidationsgas-Zuführleitung als auch der Oxidationsgas-Abführleitung eingerichtet ist und der ausgebildet ist, um Feuchtigkeit zu tauschen zwischen dem Oxidationsgas, das durch die Oxidationsgas-Zuführleitung strömt, und einem Gas, das durch die Oxidationsgas-Abführleitung strömt;
eine Vorrichtung zur Bildung/Beseitigung einer Gaszirkulationsleitung, die ausgebildet ist, um eine geschlossene Gaszirkulationsleitung zu bilden oder zu beseitigen durch Verbinden oder Trennen eines (nachstehend als erster Abschnitt bezeichneten) Abschnitts der Oxidationsgas-Abführleitung, welcher Abschnitt sich stromab des Feuchtigkeitstauschers befindet, mit oder von einem ersten Verbindungspunkt der Oxidationsgas-Zuführleitung, welcher Punkt sich stromab des Feuchtigkeitstauschers befindet;
eine Gasabführleitung, durch die der zweite Abschnitt der Oxidationsgas-Zuführleitung kommunikativ mit der Atmosphäre verbunden wird;
eine Spülgas-Zuführleitung mit einem stromab befindlichen Ende, das mit der Gaszirkulationsleitung verbunden ist;
eine Spülgas-Zuführvorrichtung, die mit einem stromauf befindlichen Ende der Spülgas-Zuführleitung verbunden ist;
ein Luftgebläse, das ausgebildet ist, um das Spülgas durch die Gaszirkulationsleitung zirkulieren zu lassen; und
eine Atmosphärenkommunikations-/Schließvorrichtung, die ausgebildet ist, um zu veranlassen, dass ein (nachstehend als zweiter Abschnitt bezeichneter) Abschnitt der Oxidationsgas-Zuführleitung, welcher Abschnitt sich zwischen dem ersten Verbindungspunkt und dem Feuchtigkeitstauscher erstreckt, kommunikativ mit der Atmosphäre verbunden oder geschlossen wird,
wobei das Verfahren die Schritte umfasst: in einem Anhaltevorgang des Brennstoffzellensystems,
Veranlassen der Atmosphärenkommunikations-/Schließvorrichtung, einen Teil des zweiten Abschnitts, welcher Teil sich auf einer Seite befindet, wo der Feuchtigkeitstauscher vorgesehen ist, mit der Gasabführleitung zu verbinden;
Veranlassen der Oxidationsgas-Zuführvorrichtung, das Oxidationsgas zuzuführen;
Veranlassen der Spülgas-Zuführvorrichtung, das Spülgas zuzuführen, um das Gas in dem internen Oxidationsgaskanal und der Oxidationsgas-Abführleitung zu spülen;
Veranlassen der Vorrichtung zur Bildung/Beseitigung einer Gaszirkulationsleitung, einen Teil des ersten Abschnitts, welcher Teil sich auf einer Seite befindet, wo der Feuchtigkeitsaustauscher vorgesehen ist, mit dem ersten Verbindungspunkt der Oxidationsgas-Zuführleitung zu verbinden;
Veranlassen der Spülgas-Zuführvorrichtung, die Zufuhr des Spülgases anzuhalten; und
Veranlassen des Luftgebläses zu arbeiten, um das Spülgas durch die Gaszirkulationsleitung zirkulieren zu lassen.

## Revendications

1. Système de pile à combustible comprenant :
une pile à combustible comportant une anode contenant un catalyseur et ayant une capacité de diffusion gazeuse, une cathode contenant un catalyseur et ayant une capacité de diffusion gazeuse, une conduite interne pour gaz combustible constituée de telle manière qu'un gaz combustible s'écoule tout en étant en contact avec l'anode, et une conduite interne pour gaz oxydant constituée de telle manière qu'un gaz oxydant s'écoule tout en étant en contact avec la cathode ;
un passage d'apport en gaz oxydant présentant une extrémité aval en communication avec une extrémité amont de la conduite interne pour gaz oxydant ;
un dispositif d'apport en gaz oxydant relié à une extrémité amont du passage d'apport en gaz oxydant et configuré pour apporter le gaz oxydant par le passage d'apport en gaz oxydant à la conduite interne pour gaz oxydant ;
un passage d'évacuation de gaz oxydant présentant une extrémité amont en communication avec une extrémité aval de la conduite interne pour gaz oxydant ;
un échangeur d'humidité disposé à la fois sur le passage d'apport en gaz oxydant et le passage d'évacuation de gaz oxydant et configuré pour permettre l'échange d'humidité entre le gaz oxydant qui s'écoule dans le passage d'apport en gaz oxydant et un gaz qui s'écoule dans le passage d'évacuation de gaz oxydant ;
un dispositif de formation/annulation de passage de circulation de gaz configuré pour former ou annuler un passage fermé de circulation de gaz en reliant ou en séparant une partie (dénommée ci-après première partie) du passage d'évacuation de gaz oxydant, laquelle partie est située en aval de l'échangeur d'humidité, avec un premier point de connexion du passage d'apport en gaz oxydant, lequel point est situé en aval de l'échangeur d'humidité ;
une soufflerie à air configurée pour faire circuler un gaz dans le passage de circulation de gaz ; et
un dispositif de communication avec l'atmosphère/fermeture configuré pour amener une partie (dénommée ci-après seconde partie) du passage d'apport en gaz oxydant, laquelle partie s'étend entre le premier point de connexion et l'échangeur d'humidité, à être mise en communication avec l'atmosphère ou à être fermée,
dans lequel le système de pile à combustible est configuré de telle manière que, dans une manoeuvre d'arrêt du système de pile à combustible, l'humidité retenue par le gaz présent dans le passage de circulation de gaz soit absorbée et éliminée dans l'échangeur d'humidité sous l'effet du gaz oxydant sec apporté par le dispositif d'apport en gaz oxydant.

2. Système de pile à combustible selon la revendication 1, dans lequel, dans une manoeuvre d'arrêt du système de pile à combustible,
le dispositif de formation/annulation de passage de circulation de gaz relie la première partie du passage d'évacuation de gaz oxydant et le premier point de connexion du passage d'apport en gaz oxydant pour former le passage de circulation de gaz par une partie du passage d'apport en gaz oxydant, laquelle partie est située en aval du premier point de connexion, de la conduite interne pour gaz oxydant, et du passage d'évacuation de gaz oxydant,
le dispositif de communication avec l'atmosphère/fermeture amène la seconde partie du passage d'apport en gaz oxydant à être mise en communication avec l'atmosphère, et
la soufflerie à air fait circuler le gaz dans le passage de circulation de gaz pour permettre l'échange d'humidité entre le gaz oxydant qui s'écoule dans le passage d'apport en gaz oxydant et le gaz qui s'écoule dans le passage d'évacuation de gaz oxydant par l'échangeur d'humidité.

3. Système de pile à combustible selon la revendication 1, comprenant en outre :
un organe de commande ; et
un passage d'évacuation de gaz par l'intermédiaire duquel la seconde partie du passage d'apport en gaz oxydant est mise en communication avec l'atmosphère, dans lequel :
le dispositif de formation/annulation de passage de circulation de gaz est une première vanne trois voies qui est disposée sur la première partie du passage d'évacuation de gaz oxydant et
relie de manière sélective une section de la première partie, laquelle section est située sur un côté sur lequel l'échangeur d'humidité est prévu, avec le premier point de connexion du passage d'apport en gaz oxydant ou avec une partie d'extrémité aval de la première partie ;
le dispositif de communication avec l'atmosphère/fermeture est une seconde vanne trois voies qui est disposée sur la seconde partie du passage d'apport en gaz oxydant et relie de manière sélective une section de la seconde partie, laquelle section est située sur le côté sur lequel l'échangeur d'humidité est prévu, avec une section de la seconde partie, laquelle section est située sur un côté sur lequel le premier point de connexion est prévu, ou avec le passage d'évacuation de gaz ; et
l'organe de commande effectue la commande du dispositif d'apport en gaz oxydant, la première vanne trois voies, et la seconde vanne trois voies.

4. Système de pile à combustible selon la revendication 3, dans lequel, dans une manoeuvre d'arrêt du système de pile à combustible,
l'organe de commande amène la première vanne trois voies à relier la section de la première partie, laquelle section est située sur le côté sur lequel l'échangeur d'humidité est prévu, avec le premier point de connexion du passage d'apport en gaz oxydant, et
après cela, l'organe de commande amène la seconde vanne trois voies à relier la section de la seconde partie, laquelle section est située sur le côté sur lequel l'échangeur d'humidité est prévu, avec le passage d'évacuation de gaz et amène le dispositif d'apport en gaz oxydant à apporter le gaz oxydant.

5. Système de pile à combustible selon la revendication 4, comprenant en outre un détecteur de température configuré pour détecter la température de la pile à combustible, dans lequel au cas où la température de la pile à combustible détectée par le détecteur de température est égale ou inférieure à un seuil pré-établi, l'organe de commande amène le dispositif d'apport en gaz oxydant à arrêter l'apport en gaz oxydant et amène la soufflerie à air à arrêter la circulation du gaz dans le passage de circulation de gaz.

6. Système de pile à combustible selon la revendication 4, comprenant en outre un détecteur de pression configuré pour détecter la pression du gaz dans le passage de circulation de gaz, dans lequel
au cas où la pression dans le passage de circulation de gaz détectée par le détecteur de pression est une pression négative, l'organe de commande amène la seconde vanne trois voies à relier la section de la seconde partie, laquelle section est située sur le côté sur lequel l'échangeur d'humidité est prévu, avec la section de la seconde partie, laquelle section est située sur le côté sur lequel le premier point de connexion est prévu, pour effectuer une compensation de pression.

7. Système de pile à combustible selon la revendication 6, comprenant en outre une partie de stockage configurée pour stocker le nombre de moments d'exécution de compensation de pression, dans lequel
au cas où le nombre de moments d'exécution de compensation de pression est égal ou supérieur à un nombre de moments prédéterminé, l'organe de commande amène le dispositif d'apport en gaz oxydant à arrêter l'apport en gaz oxydant et amène la soufflerie à air à arrêter la circulation du gaz dans le passage de circulation de gaz.

8. Système de pile à combustible selon la revendication 3, comprenant en outre :
un passage d'apport en gaz de purge présentant une extrémité aval reliée au passage de circulation de gaz ; et
un dispositif d'apport en gaz de purge relié à une extrémité amont du passage d'apport en gaz de purge, dans lequel
l'organe de commande effectue la commande du dispositif d'apport en gaz de purge.

9. Système de pile à combustible selon la revendication 8, dans lequel, dans une manoeuvre d'arrêt du système de pile à combustible,
l'organe de commande amène la seconde vanne trois voies à relier la section de la seconde partie, laquelle section est située sur le côté sur lequel l'échangeur d'humidité est prévu, avec le passage d'évacuation de gaz et amène le dispositif d'apport en gaz oxydant à apporter le gaz oxydant,
après cela, l'organe de commande amène le dispositif d'apport en gaz de purge à apporter le gaz de purge pour purger le gaz dans la conduite interne pour gaz oxydant et le passage d'évacuation de gaz oxydant,
après cela, l'organe de commande amène la première vanne trois voies à relier la section de la première partie, laquelle section est située sur le côté sur lequel l'échangeur d'humidité est prévu, avec le premier point de connexion du passage d'apport en gaz oxydant,
après cela, l'organe de commande amène le dispositif d'apport en gaz de purge à arrêter l'apport en gaz de purge, et
après cela, l'organe de commande amène la soufflerie à air à entrer en fonctionnement pour faire circuler le gaz de purge par le passage de circulation de gaz.

10. Système de pile à combustible selon la revendication 9, comprenant en outre un détecteur de température configuré pour détecter la température de la pile à combustible, dans lequel au cas où la température de la pile à combustible détectée par le détecteur de température est égale ou inférieure à un seuil pré-établi, l'organe de commande amène le dispositif d'apport en gaz oxydant à arrêter l'apport en gaz oxydant et amène la soufflerie à air à arrêter la circulation du gaz de purge.

11. Système de pile à combustible selon la revendication 9, comprenant en outre un détecteur de pression configuré pour détecter la pression du gaz dans le passage de circulation de gaz de purge, dans lequel
au cas où la pression dans le passage de circulation de gaz détectée par le détecteur de pression est une pression négative, l'organe de commande amène le dispositif d'apport en gaz de purge à apporter le gaz de purge pour effectuer une compensation de pression.

12. Système de pile à combustible selon la revendication 11, comprenant en outre une partie de stockage configurée pour stocker le nombre de moments d'exécution de compensation de pression, dans lequel
au cas où le nombre de moments d'exécution de compensation de pression est égal ou supérieur à un nombre de moments prédéterminé, l'organe de commande amène le dispositif d'apport en gaz oxydant à arrêter l'apport en gaz oxydant et amène la soufflerie à air à arrêter la circulation du gaz de purge.

13. Système de pile à combustible selon la revendication 8, comprenant en outre :
un dispositif d'apport de matière première configuré pour apporter un gaz matière première ;
un dispositif de traitement de combustible configuré pour reformer le gaz matière première pour générer le gaz combustible ; et
un passage d'apport en gaz matière première reliant le dispositif d'apport de matière première et le dispositif de traitement de combustible, dans lequel
le dispositif d'apport en gaz de purge est le dispositif d'apport de matière première.

14. Système de pile à combustible selon la revendication 8, dans lequel le gaz de purge est de l'hydrogène.

15. Système de pile à combustible selon la revendication 1, dans lequel l'échangeur d'humidité est un échangeur de chaleur à enthalpie totale.

16. Procédé d'exploitation d'un système de pile à combustible,
le système de pile à combustible comprenant :
une pile à combustible comportant une anode contenant un catalyseur et ayant une capacité de diffusion gazeuse, une cathode contenant un catalyseur et ayant une capacité de diffusion gazeuse, une conduite interne pour gaz combustible constituée de telle manière qu'un gaz combustible s'écoule tout en étant en contact avec l'anode, et une conduite interne pour gaz oxydant constituée de telle manière qu'un gaz oxydant s'écoule tout en étant en contact avec la cathode ;
un passage d'apport en gaz oxydant présentant une extrémité aval en communication avec une extrémité amont de la conduite interne pour gaz oxydant ;
un dispositif d'apport en gaz oxydant relié à une extrémité amont du passage d'apport en gaz oxydant et configuré pour apporter le gaz oxydant par le passage d'apport en gaz oxydant à la conduite interne pour gaz oxydant ;
un passage d'évacuation de gaz oxydant présentant une extrémité amont en communication avec une extrémité aval de la conduite interne pour gaz oxydant ;
un échangeur d'humidité disposé à la fois sur le passage d'apport en gaz oxydant et le passage d'évacuation de gaz oxydant et configuré pour permettre l'échange d'humidité entre le gaz oxydant qui s'écoule dans le passage d'apport en gaz oxydant et un gaz qui s'écoule dans le passage d'évacuation de gaz oxydant ;
un dispositif de formation/annulation de passage de circulation de gaz configuré pour former ou annuler un passage fermé de circulation de gaz en reliant ou en séparant une partie (dénommée ci-après première partie) du passage d'évacuation de gaz oxydant, laquelle partie est située en aval de l'échangeur d'humidité, avec un premier point de connexion du passage d'apport en gaz oxydant, lequel point est situé en aval de l'échangeur d'humidité ;
une soufflerie à air configurée pour faire circuler un gaz dans le passage de circulation de gaz ;
un dispositif de communication avec l'atmosphère/fermeture configuré pour amener une partie (dénommée ci-après seconde partie) du passage d'apport en gaz oxydant, laquelle partie s'étend entre le premier point de connexion et l'échangeur d'humidité, à être mise en communication avec l'atmosphère ou à être fermée ; et
un passage d'évacuation de gaz par l'intermédiaire duquel la seconde partie du passage d'apport en gaz oxydant est mise en communication avec l'atmosphère,
le procédé comprenant les étapes consistant à : dans une manoeuvre d'arrêt du système de pile à combustible,
amener le dispositif de formation/annulation de passage de circulation de gaz à relier une section de la première partie, laquelle section est située sur un côté sur lequel l'échangeur d'humidité est prévu, avec le premier point de connexion du passage d'apport en gaz oxydant ;
amener le dispositif de communication avec l'atmosphère/fermeture à relier une section de la seconde partie, laquelle section est située sur un côté sur lequel l'échangeur d'humidité est prévu, avec le passage d'évacuation de gaz ; et
amener le dispositif d'apport en gaz oxydant à apporter le gaz oxydant.

17. Procédé d'exploitation d'un système de pile à combustible,
le système de pile à combustible comprenant :
une pile à combustible comportant une anode contenant un catalyseur et ayant une capacité de diffusion gazeuse, une cathode contenant un catalyseur et ayant une capacité de diffusion gazeuse, une conduite interne pour gaz combustible constituée de telle manière qu'un gaz combustible s'écoule tout en étant en contact avec l'anode, et une conduite interne pour gaz oxydant constituée de telle manière qu'un gaz oxydant s'écoule tout en étant en contact avec la cathode ;
un passage d'apport en gaz oxydant présentant une extrémité aval en communication avec une extrémité amont de la conduite interne pour gaz oxydant ;
un dispositif d'apport en gaz oxydant relié à une extrémité amont du passage d'apport en gaz oxydant et configuré pour apporter le gaz oxydant par le passage d'apport en gaz oxydant à la conduite interne pour gaz oxydant ;
un passage d'évacuation de gaz oxydant présentant une extrémité amont en communication avec une extrémité aval de la conduite interne pour gaz oxydant ;
un échangeur d'humidité disposé à la fois sur le passage d'apport en gaz oxydant et le passage d'évacuation de gaz oxydant et configuré pour permettre l'échange d'humidité entre le gaz oxydant qui s'écoule dans le passage d'apport en gaz oxydant et un gaz qui s'écoule dans le passage d'évacuation de gaz oxydant ;
un dispositif de formation/annulation de passage de circulation de gaz configuré pour former ou annuler un passage fermé de circulation de gaz en reliant ou en séparant une partie (dénommée ci-après première partie) du passage d'évacuation de gaz oxydant, laquelle partie est située en aval de l'échangeur d'humidité, avec un premier point de connexion du passage d'apport en gaz oxydant, lequel point est situé en aval de l'échangeur d'humidité ;
un passage d'évacuation de gaz par l'intermédiaire duquel la seconde partie du passage d'apport en gaz oxydant est mise en communication avec l'atmosphère ;
un passage d'apport en gaz de purge présentant une extrémité aval reliée au passage de circulation de gaz ;
un dispositif d'apport en gaz de purge relié à une extrémité amont du passage d'apport en gaz de purge ;
une soufflerie à air configurée pour faire circuler le gaz de purge par le passage de circulation de gaz ; et
un dispositif de communication avec l'atmosphère/fermeture configuré pour amener une partie (dénommée ci-après seconde partie) du passage d'apport en gaz oxydant, laquelle partie s'étend entre le premier point de connexion et l'échangeur d'humidité, à être mise en communication avec l'atmosphère ou à être fermée,
le procédé comprenant les étapes consistant à : dans une manoeuvre d'arrêt du système de pile à combustible,
amener le dispositif de communication avec l'atmosphère/fermeture à relier une section de la seconde partie, laquelle section est située sur un côté sur lequel l'échangeur d'humidité est prévu, avec le passage d'évacuation de gaz ;
amener le dispositif d'apport en gaz oxydant à apporter le gaz oxydant ;
amener le dispositif d'apport en gaz de purge à apporter le gaz de purge pour purger le gaz dans la conduite interne pour gaz oxydant et le passage d'évacuation de gaz oxydant ;
amener le dispositif de formation/annulation de passage de circulation de gaz à relier une section de la première partie, laquelle section est située sur un côté sur lequel l'échangeur d'humidité est prévu, avec le premier point de connexion du passage d'apport en gaz oxydant ;
amener le dispositif d'apport en gaz de purge à arrêter l'apport en gaz de purge ; et
amener la soufflerie à air à entrer en fonctionnement pour faire circuler le gaz de purge par le passage de circulation de gaz.
